# EUROPEAN PATENT APPLICATION

(11) **EP 4 830 813 A1**
(43) Date of publication of application: **28.10.2026**
(21) Application number: 24908298.3
(22) Date of filing: 17.12.2024
(51) Int. Cl.: B01D 53/04, B01D 53/86

(54) **GASEOUS SUBSTANCE RECIRCULATION-TYPE CONCENTRATOR/OXIDIZER**

(30) Priority: 20.12.2023 KR 20230186984; 30.09.2024 KR 20240133174
(71) Applicant: Enbion Inc., Daejeon 34026 (KR)
(72) Inventor: LEE, Hyun Jae, Daejeon 35228 (KR); LEE, Seung Kil, Yongin-si Gyeonggi-do 16998 (KR); LEE, Sanggi, Daejeon 34048 (KR); PARK, Min Soo, Daejeon 35272 (KR)
(74) Representative: Mammel und Maser Patentanwälte PartG mbB
(86) International application number: PCT/KR2024/097045
(87) International publication number: WO 2025/136016

(57) **Abstract**

The present invention relates to a device for highly concentrating volatile organic compounds and an exhaust gas treatment device for treating same. The present invention provides a concentrator/oxidizer comprising: an adsorption concentrator for adsorbing and concentrating gaseous substances in exhaust gas discharged from an emission source; and an oxidizer for oxidizing the gaseous substances concentrated by the adsorption concentrator. The adsorption concentrator includes: an adsorption member, including an adsorption region, a desorption region, and a cooling region, for adsorbing, concentrating, and desorbing the gaseous substances in the exhaust gas discharged from the emission source; a plurality of streams including an exhaust gas stream for making the exhaust gas flow from the emission source into the adsorption region, a desorption gas stream for making desorption gas flow into and out of the desorption region, a cooling gas stream for making cooling gas flow into and out of the cooling region, and a recirculation stream that branches from the desorption gas stream discharged from the desorption region; and a heating means for heating the desorption gas stream that flows into the desorption region. The device includes the oxidizer, which is connected downstream of the cooling region, for oxidizing the gas branched from the cooling gas stream.

## Description

### [Technical Field]

The present disclosure relates to an apparatus for oxidatively treating waste gas including gaseous substances such as odor, carbon dioxide, and volatile organic compounds and, more particularly, to a gaseous substance concentration and oxidation apparatus configured to remove low-concentration gaseous substances discharged from, for example, an air purifier, a printing process, a coating process, a semiconductor process, a carbon dioxide emission facility, or an odor facility by concentrating and then oxidizing the low-concentration gaseous substances.

### [Background Art]

As legal regulations on the atmospheric environment have been strengthened, in the case of gaseous substances simultaneously including odor and volatile organic compounds, a method of oxidatively treating such gaseous substances using heat or a catalyst has been used as the safest treatment method. However, oxidative treatment requires a large amount of energy, and waste gas containing low-concentration components contains a small amount of combustible components. When an oxidation system using a high temperature of 800°C or higher or using a catalyst at a temperature of 300°C or higher is used, additional energy consumption is significant, resulting in high treatment costs.

Due to this problem, recently, a regenerative combustion method for treating low-concentration volatile organic compounds by recovering heat at a heat recovery rate of 95% or more using a heat storage material has been widely used. The regenerative combustion method is an oxidation method of oxidizing volatile organic compounds at a high temperature while maintaining an oxidation temperature of 800°C or higher. In general, when the temperature rise is 40 to 80°C per unit cubic meter of gas due to the calorific value generated by oxidation of the volatile organic compounds in the gaseous substances, operation may be performed without additional fuel supply. However, when the temperature increase is 40°C or less per unit cubic meter of gas, additional fuel is required.

Meanwhile, in a regenerative catalytic combustion method using a catalyst, treatment may be performed more economically because the combustion temperature may be lowered to 200 to 450°C. In this case, when the calorific value per unit cubic meter of gas due to oxidation of volatile organic compounds contained in gaseous substances does not reach 10 to 30°C, a large amount of additional energy is consumed. In an actual coating process, there are many environments in which gaseous substances including odor and volatile organic compounds are discharged while the volatile organic compounds are discharged at a low concentration. Therefore, in order to combust and oxidize low-concentration odor and volatile organic compounds, additional fuel has to be supplied. Thus, there is a disadvantage in that excessive maintenance costs are incurred due to increased energy consumption.

In order to solve this problem, an oxidation apparatus in which waste gas containing low-concentration gaseous substances is adsorbed onto an adsorbent, the gaseous substances in the waste gas are concentrated by desorbing with a small amount of gas, and then the concentrated gaseous substances are combusted using a regenerative combustor has been used.

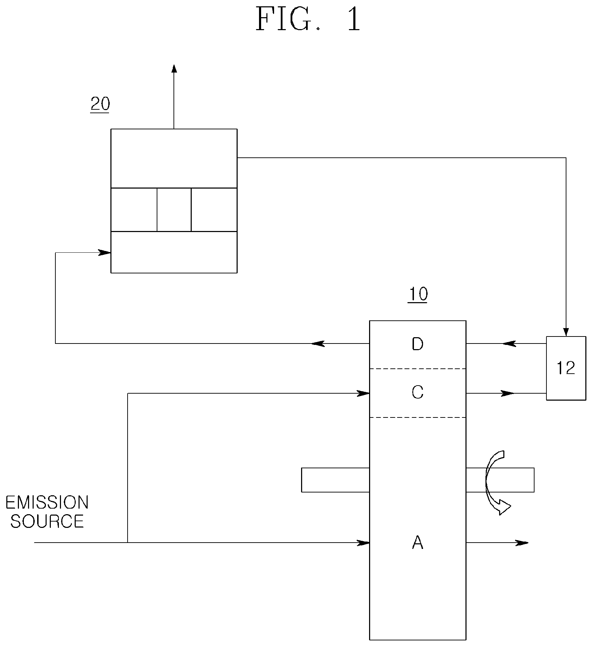

FIG. 1 is a view schematically illustrating a conventional oxidation apparatus.

Referring to FIG. 1, the oxidation apparatus includes an adsorption concentrator 10 and a regenerative combustor 20. In order to adsorb, concentrate, and desorb gaseous substances (contaminant components) in waste gas, the adsorption concentrator 10 includes an adsorbing member configured to form functional regions including an adsorption region A, a desorption region D, and a cooling region C, and a drive unit configured to relatively rotate the adsorbing member with respect to the gaseous substances. In addition, the adsorption concentrator 10 may include a heating unit 12 configured to desorb contaminant components adsorbed onto the adsorbing member, and the incoming waste gas may be branched and used as desorption gas. Gas concentrated and desorbed in the adsorption concentrator 10 is introduced into the regenerative combustor 20, combusted, and discharged. In this case, a part of the combustion gas may be used as a heat source of the heating unit 12.

In such a conventional oxidation apparatus, since the concentration of the concentrated gas is determined by the concentration of contaminant components in the waste gas and a flow rate ratio (concentration ratio) of the incoming gas to the desorption gas, a large amount of energy is inevitably required for combustion in the case of low-concentration waste gas. In addition, in the conventional oxidation apparatus, use of a large amount of heat storage material for regenerating combustion energy is essential, so that the size of the equipment is increased and, as a result, large initial investment costs are required.

### [Disclosure]

### [Technical Problem]

In order to solve the problems of the related art, the present disclosure provides a gaseous substance concentration and oxidation apparatus configured to oxidize gaseous substances in exhaust gas discharged from an emission source after concentrating the gaseous substances to a high concentration in a recirculation manner.

In addition, the present disclosure provides a gaseous substance concentration and oxidation apparatus configured to increase a concentration and temperature of the gaseous substances and to reduce energy required for oxidation and desorption of concentrated contaminant components by recirculating desorbed concentrated exhaust gas to an upstream end of an adsorbing member in an exhaust gas flow, a cooling inlet of a cooling region that recovers heat from the adsorbing member in a concentrator, a cooling outlet, and/or a desorption inlet leading to a region in which adsorbed contaminant components are desorbed.

In addition, the present disclosure provides a gaseous substance concentration and oxidation apparatus configured to simplify a configuration of equipment by recovering, with cooling air, energy transferred to the adsorbing member during a desorption process and attaching an oxidizer to a downstream end thereof.

In addition, the present disclosure provides a concentration and oxidation apparatus configured to enable combustion of low-concentration gaseous substances by concentrating the low-concentration gaseous substances without a separate heat exchange unit when a concentration and temperature of gaseous substances in a gas flow at a cooling outlet provide energy required for desorption and a temperature of waste gas is higher than an oxidation initiation temperature of the gaseous substances.

In addition, the present disclosure provides a concentration and oxidation apparatus to which a heat exchange unit may be additionally provided when, despite oxidation heat of concentrated gaseous substances, the temperature of waste gas entering an oxidizer does not reach the oxidation initiation temperature of the gaseous substances.

### [Technical Solution]

In view of the foregoing, the present disclosure provides a concentration and oxidation apparatus including an adsorption concentrator configured to adsorb and concentrate gaseous substances in exhaust gas discharged from an emission source, so that the gaseous substances concentrated by the adsorption concentrator are oxidized. The adsorption concentrator includes: an adsorbing member including an adsorption region, a desorption region, and a cooling region, configured to adsorb, concentrate, and desorb gaseous substances in the exhaust gas discharged from the emission source; and conduits configured to provide a plurality of flows including an exhaust gas flow for introducing the exhaust gas from the emission source into the adsorption region, a desorption gas flow introduced into and discharged from the desorption region, a cooling gas flow for introducing cooling gas into and discharging the cooling gas from the cooling region, and a recirculation flow branched from the desorption gas flow discharged from the desorption region and merging into at least one of the exhaust gas flow, the cooling gas flow, and the desorption gas flow. The concentration and oxidation apparatus further includes a heating unit configured to heat the desorption gas flow introduced into the desorption region, an oxidizer configured to oxidize the cooling gas flow or gas branched from the cooling gas flow. An oxidizer exhaust gas flow discharged from the oxidizer is introduced into the desorption gas flow introduced into the desorption region or merges into the desorption gas flow introduced into the desorption region.

In the present disclosure, the cooling region of the adsorbing member may include a first cooling region and a second cooling region, and a gas flow that has passed through the first cooling region has a higher temperature than a gas flow that has passed through the second cooling region, and a first cooling gas flow that has passed through the first cooling region may be introduced into the oxidizer. In this case, the first cooling gas flow may be introduced into the oxidizer via the heating unit.

The apparatus of the present disclosure may include a first oxidizer inlet gas flow branched from a first point of the cooling gas flow and provided to the oxidizer, and a first oxidizer exhaust gas flow discharged from the oxidizer and merging into a second point of the cooling gas flow. The first point may be located downstream of the second point along a path of the gas flow.

In addition, the apparatus of the present disclosure may include a first oxidizer inlet gas flow branched from a first point of the cooling gas flow and provided to the oxidizer; and a first oxidizer exhaust gas flow discharged from the oxidizer and merging into a second point of the cooling gas flow. The first point may be located upstream of the second point along a path of the gas flow.

In the present disclosure, the oxidizer may be one selected from a group consisting of a catalyst oxidizer, a catalyst oxidizer having recuperative heat exchanger attached thereto, a regenerative thermal oxidizer, and a regenerative catalyst oxidizer.

In the present disclosure, the first oxidizer inlet gas flow is branched at a downstream end of the heating unit.

In the present disclosure, the first oxidizer inlet gas flow may be branched when the concentration of the desorption gas flow is equal to or greater than a predetermined concentration.

The apparatus of the present disclosure may include a second oxidizer inlet gas flow branched from a desorption gas flow discharged from the desorption region and supplied to the oxidizer.

In this case, a purge gas that has passed through a purge region merges into a cooling gas flow discharged from the cooling region.

In the present disclosure, the recirculation flow may merge into a cooling gas flow introduced into the cooling region.

In the present disclosure, the recirculation flow may merge into an exhaust gas flow introduced into the adsorption region.

In the present disclosure, a cooling unit or a condensation recovery unit may be provided in the recirculation flow.

In the present disclosure, a cooling unit may be provided in the desorption gas flow.

In the present disclosure, a portion of the cooling gas flow may merge into an inlet gas flow.

### [Advantageous Effects]

According to the present disclosure, a concentration and oxidation apparatus for gaseous substances may be provided, in which contaminant components in low-concentration exhaust gas are concentrated to a high concentration through recirculation and oxidized.

According to the present disclosure, a gaseous substance concentration and oxidation apparatus capable of reducing installation cost of combustion equipment may be provided by imparting a heat exchange function to the adsorption concentrator, such that combustion of gaseous substances is achieved using energy recovered in a cooling region, energy generated in an oxidizer, and recirculation of concentrated desorption gas, without using a separate heat exchange unit or even when using the heat exchange unit with a minimized capacity.

According to the present disclosure, by imparting a heat exchange function to the adsorption concentrator, a concentration and oxidation apparatus for gaseous substances may be provided, in which energy required for desorption of concentrated desorption gas may be reduced.

### [Description of Drawings]

FIG. 1 is a view schematically illustrating a conventional concentration and oxidation apparatus.
FIG 2A is a view schematically illustrating a concentration and oxidation apparatus configured to highly concentrate gaseous substances and treat the gaseous substances according to an embodiment of the present disclosure.
FIG. 2B is a view schematically illustrating a concentration and oxidation apparatus according to another embodiment of the present disclosure, configured to highly concentrate and treat gaseous substances.
FIG. 3 is a view conceptually illustrating that a cross-section of an adsorbing member of the concentrator of the present disclosure is divided into and partitioned by a plurality of functional regions.
FIG. 4 is a view schematically illustrating that a cross-section of an adsorbing member of the concentrator of the present disclosure is divided into and partitioned by a plurality of functional regions, including a primary cooling region and a secondary cooling region partitioned from each other.
FIGS. 5A to 10C are views schematically illustrating embodiments according to another aspect of the present disclosure.
FIG. 11 is a view illustrating an embodiment of an oxidizer used in the present disclosure.

### [Mode for Invention]

Hereinafter, embodiments of the present disclosure will be described in detail with reference to the accompanying drawings. In describing the present disclosure, detailed descriptions of related known configurations or functions will be omitted when it is determined that the detailed descriptions may obscure the gist of the present disclosure.

Hereinafter, in the specification of the present disclosure, the term "gaseous substance" is used as a term referring not only to volatile organic compound components such as organic solvents, for example, toluene and N-methyl-2-pyrrolidone (NMP), but also to contaminant components such as odor components, and harmful components such as CO₂ and NOₓ. In addition, in the specification of the present disclosure, the term "gaseous substance" may include water vapor.

Accordingly, in the specification of the present disclosure, components of a gaseous substance may vary depending on the type of the gaseous substance, and the gaseous substance may refer only to odor components, may refer to gaseous substance components, or may refer to both odor components and other harmful components.

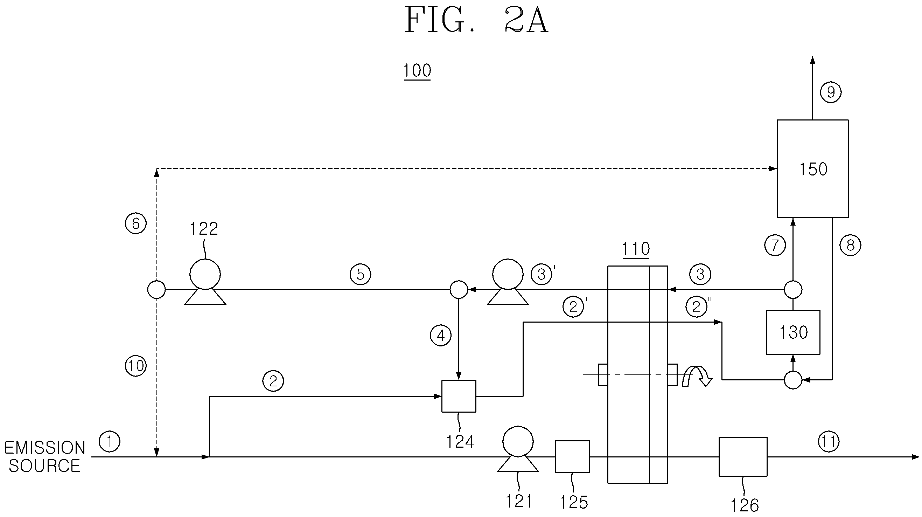

FIG. 2A is a drawing schematically illustrating a concentration and oxidation apparatus according to an embodiment of the present disclosure.

Referring to FIG. 2A, the concentration and oxidation apparatus 100 includes an adsorption concentrator 110, a heating unit 130, and an oxidizer 150.

Contaminant components or harmful components, that is, gaseous substances, contained in exhaust gas introduced from an emission source are adsorbed onto an adsorbent of an adsorbing member of the adsorption concentrator 110 while passing through the adsorption concentrator 110, and are then desorbed in a concentrated state. To this end, the adsorption concentrator 110 performs a series of processes of adsorbing contaminant components onto the adsorbing member, concentrating and desorbing the adsorbed contaminant components, and cooling the desorbed adsorbing member.

The adsorption concentrator 110 of FIG. 2A may use an adsorbing member as an adsorption concentration unit for gaseous substances.

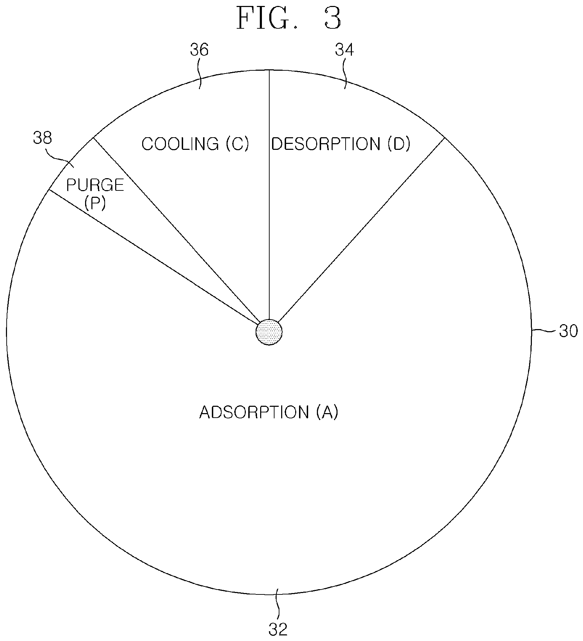

FIG. 3 is a view schematically illustrating a cross-section of a cylindrical adsorbing member constituting an adsorption concentrator.

FIG. 3 is a view schematically illustrating a cross-section of the adsorbing member 30 of the present disclosure, and conceptually illustrates that the adsorbing member 30 is partitioned into an adsorption region A, a cooling region C, and a desorption region D.

In the present disclosure, the adsorbing member 30 may be formed of an appropriate material having heat storage properties and gas adsorption properties. In general, the adsorbing member may be formed by coating an adsorbent having excellent adsorption capability on a base material formed by bending a ceramic fiber, a glass fiber, or an aluminum or stainless-steel plate. Of course, the present disclosure is not limited thereto, and as the adsorbing member 30, one material selected from the group consisting of zeolite such as 3A, 4A, USY, or ZSM-5, a metal organic framework (MOF), activated carbon, activated carbon fiber, a carbon nanotube (CNT), graphene, alumina, silica, and a polymer resin, or a composite material of selected materials, may be used.

In addition, in order to enhance heat storage properties of the material, a material such as SiC, alumina, silica, cordierite, or zirconia may be additionally included.

The adsorbing member may also be configured as a packed type using spherical adsorbents, amorphous adsorbents, cylindrical adsorbents, and honeycomb-type adsorbents, or a honeycomb-shaped adsorbing member having improved air permeability and contact area may be used by forming a laminated adsorbent using bent, extruded, and sheet-type adsorbents.

The adsorbing member may be configured as a multi-stage adsorbing member. For example, the adsorbing member may include an upstream member facing the exhaust gas flow and a downstream member adjacent thereto, and the upstream member and the downstream member may be formed of different materials. For example, the upstream member may include one material selected from the group consisting of silica, zeolite 3A, zeolite 4A, diatomite, and an MOF, which are hydrophilic adsorbents that readily adsorb moisture, and the downstream member may include, as a main component, hydrophobic zeolite having a Si/Al molar ratio of 15 or more among zeolites (e.g., USY ZSM-5, and beta) that have a low relative adsorption capability for moisture and readily adsorb volatile organic compounds.

As illustrated in FIG. 2A, in the present disclosure, a rotor-type adsorption concentrator capable of adjusting a rotational speed according to a concentration of incoming gaseous substances may be used as the adsorption concentrator 110. In this embodiment, the rotor of the adsorption concentrator 110 may rotate at a rotational speed of 2 to 20 rph. In the present disclosure, the rotational speed of the rotor is exemplary, and may be set differently depending on process circumstances or process conditions. In addition, various types of rotors may be applied as long as the adsorption concentrator is capable of repeatedly performing adsorption, cooling, and desorption processes by rotation thereof, regardless of whether the rotation of the rotor is continuous or intermittent.

As described above, gaseous substances contained in exhaust gas of an emission source are introduced into the adsorption concentrator 110 and adsorbed in the adsorption region A of the adsorbing member. As the rotor rotates, the adsorbing member 10 having the gaseous substances adsorbed thereon enters the desorption region D, and the adsorbed gaseous substances are desorbed by desorption air. At this time, as the desorption gas, gas having a flow rate lower than that of the exhaust gas introduced into the adsorption region A is used. Preferably, the flow rate of the desorption gas and the flow rate of the adsorption gas are in a ratio of 1/3 to 1/30. Accordingly, the desorption gas may contain gaseous substances at a concentration 3 to 30 times higher than that of the adsorption gas. The ratio between the flow rate of the exhaust gas introduced into the adsorption region A and the flow rate of the desorption gas may be controlled according to concentration by adjusting a desorption gas transfer unit. However, when the amount of the desorption gas is excessively reduced, desorption does not occur if desorption energy required for desorption of the gaseous substances cannot be delivered, and therefore the amount of the desorption gas should be appropriately controlled.

In the present disclosure, the concentration and oxidation apparatus 100 includes a plurality of gas flows and flow paths for implementing the gas flows. As illustrated, appropriate flow paths are provided so that, for example, an exhaust gas flow ① from a contamination source (or an emission source), passing through the adsorbing member therein, desorption gas flows ③ and ③' in which adsorbed gaseous substances are desorbed, and cooling gas flows ②, ②', and ②" for cooling a region of the adsorbing member heated after desorption are provided. In addition, appropriate flow paths are provided so that a portion of the desorption gas flow ③' is branched into a recirculation flow ④ and merges into the cooling gas flow ②', and another portion thereof is connected to an exhaust gas flow ⑤ and discharged.

In the present disclosure, various sources may be additionally provided for the cooling gas flow ②. For example, external air, exhaust gas from a contamination source, or purified gas may be used. Here, the external air may include clean atmospheric air, air having a controlled oxygen concentration, or, for gaseous combustible substances, an inert gas such as nitrogen, carbon dioxide, or helium. The cooling gas flow ② is mixed with the recirculation flow ④ recirculated from the desorption gas flow ③' to form a cooling gas flow ②".

In the illustrated embodiment, exhaust gas of an emission source (contamination source) is used as the cooling gas flow ②. In this case, as illustrated, a portion of the exhaust gas of the emission source is branched from the exhaust gas flow ① and merges into the cooling gas flow. Since the ratio of the flow of cooling gas branched from the exhaust gas flow ① determines the content of contaminant components in the desorption gas, the ratio may define a concentration factor. For example, the ratio of exhaust gas used as cooling gas may be determined based on the amount of the desorption gas and a recirculation rate. The flow rate ratio of (exhaust gas flow rate)/(desorption gas flow rate) is not particularly limited, but should be an amount capable of providing energy required for desorption of the adsorbed gaseous substances. In general, a ratio of 3 to 30 is mainly used in the field, and when the recirculation rate is 50% (that is, when 50% of the desorption gas is recirculated as the cooling gas), the flow rate ratio of (exhaust gas flow rate)/(branched cooling gas flow rate) increases to 6 to 60.

In addition, in the present disclosure, the concentration and oxidation apparatus 100 may be provided with appropriate gaseous substance transfer units, sensors, gas inlets, gas outlets, and a housing. In addition, appropriate valves for branching the recirculation flow and the exhaust flow, ducts for constituting flow paths, and blowing units may be provided. In addition, in the present disclosure, a plurality of flow paths passing through the adsorbing member are separated and/or partitioned by appropriate sealing units so that gas flows between the plurality of flow paths do not interfere with each other. For example, gas flows in the respective flow paths may be separated and partitioned by disposing a silicone resin, a heat-resistant polymer, or a metal or ceramic material between the housing and the adsorbing member.

Meanwhile, the cooling gas flow ②' passes through the cooling region C, is additionally heated through the heating unit 130, and is then introduced into the desorption region D. Of course, the heating unit 130 of the present disclosure may be implemented as a part of the concentration apparatus 100, or may be implemented as a separate component.

In the present disclosure, the plurality of regions may be defined based on an area in a direction substantially perpendicular to gas flows flowing and introduced as the flows ①, ②', and ③ described with reference to FIG. 2A. For example, the area of each region may be defined by a cross-sectional area perpendicular to an axial direction of the concentrator 110.

The plurality of regions may include, for example, functional regions such as an adsorption region 32, a desorption region 34, and a cooling region 36.

In the adsorbing member of the present disclosure, areas occupied by the adsorption region 32, the desorption region 34, and the cooling region 36 may be appropriately partitioned. In general, the area of the adsorption region 32 may preferably occupy 40% to 90% of the entire area of the adsorbing member 30. Accordingly, the adsorption region 32 may have a larger area than the desorption region 34 or the cooling region 36. In addition, the desorption region 34 and the cooling region 36 may be designed to have the same area, or the desorption region 34 may be designed to be smaller than the cooling region 36.

Preferably, in the present disclosure, the relationship of adsorption region area > cooling region area ≥ desorption region area may be satisfied. Specifically, in the present disclosure, the ratio of cooling region area/desorption region area may be 1.05 or more, 1.1 or more, or 1.2 or more. In addition, the upper limit of the area ratio may be limited to 1.5, 2.0, or 3.0. An excessive area ratio exceeding the upper limit is disadvantageous from the viewpoint of economic efficiency because the excessive area ratio does not substantially affect an increase in energy recovery efficiency. However, the area of each region may vary depending on process conditions. For example, the area of the cooling region may be smaller than the area of the desorption region.

Meanwhile, as illustrated, in the present disclosure, the functional regions of the adsorbing member 30 may further include a purge region 28.

The purge region 38 illustrated in FIG. 2A may be considered an additional region added to the cooling region. When the recirculation rate increases or when the temperature and concentration of concentrated gas discharged from the desorption region increase, purging may be required, and for this purpose, the purge region 28 may be additionally provided. In this case, as the purge gas introduced into the purge region 38, one gas selected from external air, exhaust gas, and purified exhaust gas, or a mixed gas thereof, may be used. Here, the external air may include clean atmospheric air, air having a controlled oxygen concentration, or, for gas combustible substances, an inert gas such as, for example, nitrogen, carbon dioxide, or helium.

In the present disclosure, during operation of the adsorbing member 30, the plurality of regions partitioned as, for example, the adsorption region 32, the desorption region 34, the cooling region 36, and the purge region 38 may be isolated or separated by sealing units so as to function as distinct regions.

The concentration and oxidation apparatus 100 of the present disclosure includes a heating unit 130 configured to heat desorption gas. In the present disclosure, as the heating unit 130, a heating device such as a heater, a microwave, or plasma (or a plasma burner) may be used, or a vibration unit such as an ultrasonic vibrator may be used. Of course, the present disclosure is not limited thereto, and various heating units may be used, but preferably an electric heater, a burner, and hot air are used as the heating device. Here, when hot air is used, a method of directly introducing the hot air into the desorption gas flow or a method of transferring heat energy through an indirect heat exchanger may be used.

As described above, a portion of the desorbed desorption gas is branched and merges into the cooling gas flow. The branching mechanism may include a gas flow transfer unit such as, for example, a blower, ducts, sensors, and valves.

In the present disclosure, the exhaust gas recirculation flow ④ passing through the recirculation duct is concentrated relative to the exhaust gas flow ① and includes gaseous substances having a high concentration. In the present disclosure, the concentration level may be determined according to a concentration factor and a recirculation rate. For example, in the present disclosure, when the ratio of desorption gas to exhaust gas from an emission source is 15 times, the concentration level may be increased up to 300 times as the recirculation rate is varied from 5% to 95%, and when an actual treatment rate of 95% is considered, exhaust gas of 0.25 g/Nm³ may be concentrated to 71.262 g/Nm³, thereby obtaining a concentration level up to 285 times.

Accordingly, the cooling gas flow ②' mixed with the exhaust gas recirculation flow concentrated in this manner contains gaseous substances at a high concentration.

Since the cooling gas flow ②' is heated by the heating unit 130 and introduced into the desorption region D of the adsorbing member 10 to desorb the adsorbed gas, the desorption gas flow ③' passing through the adsorbing member becomes more concentrated. In this way, concentrations of contaminant components in the exhaust gas recirculation flow ④, the cooling gas flow ②, and the desorption gas flow ③ increase through repetition of adsorption, cooling, and desorption, and after repeated operations, the concentrations reach a predetermined concentration selected by an operator, that is, an equilibrium concentration.

Combustible materials should be managed at or below the minimum explosive limit of the components thereof because there is a risk of fire or explosion when oxygen is present, but in order to secure safety, the combustible materials are preferably managed at a level of 25% of the minimum explosive limit. Here, since the minimum explosive limit varies depending on an ambient temperature, the minimum explosive limit should be set in consideration of the effect of temperature. However, when there is no such risk, it is also possible to set a concentration suitable for condensation, recovery, and oxidation.

In general, when desorption is performed by applying heat, the temperature of the desorption gas should be higher than the adsorption temperature, and the temperature is preferably 100 to 300°C, but the temperature of the desorption gas may vary depending on characteristics of a gaseous substance to be adsorbed and an adsorbing member.

Meanwhile, in the present disclosure, in order to use the desorption gas as a recirculation flow, a portion or all of the desorption gas may be heat-exchanged. For example, when desorption is performed at a gas temperature of 220°C, the gas concentrated after desorption transfers heat to a member in the desorption region and is discharged at a temperature of about 40 to 100°C or lower, and when the gas is recirculated, particularly when the gas is recirculated to an adsorption inlet, the temperature of the gas may partially increase, and therefore it is necessary to lower the temperature of the desorbed and recirculated gas. At this time, various units such as an air-cooled heat exchanger, a water-cooled heat exchanger, and a refrigerator may be used as the cooling unit, but in general, it is preferable to use a water-cooled heat exchanger type. In addition, in the present disclosure, a heat exchanger may be installed in a flow path branched for recirculation, or when cooling condensation or recovery is performed, may be installed before recirculated gas and discharged gas are branched.

According to the above mechanism, low-concentration gaseous substances in the exhaust gas flow ① from an initial emission source are introduced into the concentration apparatus, and as the concentration rotor rotates, the gaseous substances are repeatedly subjected to adsorption → desorption → cooling → adsorption → desorption → cooling, so that the exhaust gas flow may be gradually concentrated into high-concentration gaseous substances.

In the present disclosure, the concentration of the recirculated exhaust gas is higher than that of the introduced exhaust gas, and since heat is transferred during a desorption process, the temperature and concentration of the cooling gas become higher than in a case where recirculation is not performed. At this time, when exhaust gas having the increased concentration remains in the adsorbing member and then moves to the adsorption region, the exhaust gas may pass through the adsorption region without being adsorbed therein. Although an effect caused thereby is not significant, a purge region in which recirculated exhaust gas is not included may be provided in order to eliminate the effect and also lower the temperature. In the purge region 28, external air, exhaust gas from an emission source, or purified gas may be introduced and used for purging. Here, the external air may include clean atmospheric air, air having an adjusted oxygen concentration, or, for gaseous combustible substances, an inert gas such as nitrogen, carbon dioxide, or helium.

In this case, gas flows passing through the cooling region and the purge region may be separated from each other or may merge with each other. Since the gases passing through the cooling region and the purge region may be mixed, heated by a heating unit, and introduced into the desorption region, they do not necessarily need to be separated by a separate partition.

In an embodiment of the present disclosure, exhaust gas from an emission source may be used as purge gas for the purge region. In addition, in an embodiment of the present disclosure, the purge gas that has passed through the purge region may merge into the cooling gas flow. The purge gas that has merged with the cooling gas flow may form a desorption gas flow.

When the purge region is used, the gaseous substances may be concentrated while being sequentially switched in the order of adsorption → desorption → cooling → purge → adsorption → desorption → cooling → purge.

In the present disclosure, the concentration ratio of gaseous substances in discharged exhaust gas may be controlled based on a percentage of a flow rate of the recirculation flow ④ relative to a flow rate of the desorption gas flow ③, that is, a recirculation rate. In the present disclosure, the recirculation rate may be controlled according to a concentration of gaseous substances in at least one gas flow among an exhaust gas flow introduced from an emission source into the adsorbing member, a recirculation gas flow introduced into the adsorbing member (cooling region), and a gas flow passing through the adsorbing member. In the present disclosure, the recirculation rate may range from 1% to 99.9%, and preferably may range from 5% to 95%. For example, the recirculation rate may be 5% or more, 10% or more, 15% or more, or 20% or more. In addition, the recirculation rate may be 95% or less, 90% or less, 85% or less, or 80% or less.

For example, the concentration of gaseous substances introduced or recirculated may be designed to be maintained at or below a lower explosive limit (LEL), at which explosion occurs due to introduction of oxygen. Preferably, in the present disclosure, since the temperature of exhaust gas including combustible vapor capable of exploding is not constant, the recirculation flow ④ and the desorption gas flow ③ are preferably controlled at a predetermined ratio in consideration of safety so as to maintain the concentration at 1/4 to 1/5 of the lower explosive limit. For example, referring to Table 1, the lower explosive limit of toluene is 52.2 g/Nm³, and 1/4 thereof is 13.05 g/Nm³. If the concentration is to be controlled to 13.05 g/Nm³ or less, when the concentration is 0.25 g/Nm³ and the recirculation rate is 80%, the concentration may be increased up to 14.263 g/Nm³, and therefore a recirculation rate lower than 80% is preferably set, and when the concentration is 0.5 g/Nm³ and 60% is recirculated, the concentration may be increased up to 14.275 g/Nm³, and therefore a recirculation rate lower than 60% is preferably set.

The apparatus of the present disclosure may include a concentration sensor 125 configured to measure the concentration of gaseous substances in order to control the recirculation rate. FIG. 2A illustrates that a concentration sensor is installed at the upstream end of the adsorption region of the adsorbing member 10 in the exhaust gas flow, but this is exemplary, and the concentration sensor may be installed on an appropriate flow path before the gas is introduced into the adsorbing member 10 of the concentration apparatus. Of course, the concentration sensor may also be installed on the desorption gas flow path, or may be installed on all of the upstream end of the adsorbing member, the desorption gas flow path, and the cooling gas flow path. In addition, an additional concentration sensor 126 may be installed on the gas flow path passing through the adsorbing member, and the downstream concentration sensor 126 is configured to control adsorption efficiency so that a concentration at the downstream end of the adsorbing member does not increase to a predetermined level or higher.

In the present disclosure, the concentration and oxidation apparatus 100 includes an oxidizer 150. In the present disclosure, the oxidizer 150 is coupled to a downstream end of the cooling region 26 of the adsorption concentrator 110 on a gas flow path, and cooling gas flows ②' and ②" that have passed through the cooling region are introduced into the oxidizer 150. This differs from a conventional concentration and oxidation apparatus in which an oxidizer is coupled to a downstream end of the desorption region 24 on the gas flow path and a concentrated exhaust gas flow ⑤ is introduced into the oxidizer.

In the present disclosure, as the oxidizer 150, an oxidizer capable of oxidizing concentrated contaminant components discharged from a cooling outlet with low additional energy or without additional energy may be used. For example, the present disclosure may use a catalyst oxidizer capable of oxidizing contaminant components at 50 to 400°C, and more preferably may use a catalyst oxidizer capable of initiating an oxidation reaction of concentrated contaminant components at 120 to 300°C. However, the present disclosure does not exclude the use of, as in the related art, an oxidation apparatus having a heat exchange unit for treating highly concentrated gas discharged from a cooling outlet after energy is recovered from the adsorbing member, the gas having a temperature of 120 to 300°C, that is, a regenerative oxidizer, a catalyst oxidizer having a heat exchanger attached thereto, or a high-temperature oxidizer having a heat exchanger attached thereto. Here, the regenerative oxidizer refers to an oxidizer such as a regenerative thermal oxidizer (RTO) or a regenerative catalyst oxidizer (RCO), in which a heat storage material is divided into an inflow region of process gas and a discharge region of combustion gas and energy accumulated in the heat storage material of the discharge region is regenerated as a heat source of the inflow region. When an oxidizer having a heat storage layer and a heat exchanger attached thereto is used, the oxidizer may be structurally complicated and accompanied by increases in installation cost and installation area, but may be applied when the cooling outlet temperature is low and a catalyst oxidizer, a regenerative thermal oxidizer, or a regenerative catalyst oxidizer cannot be used.

In the present disclosure, the catalyst oxidizer may include an oxidation catalyst. The oxidation catalyst may be one in which a catalyst component is supported on a porous body having a high specific surface area. The catalyst component may include at least one component selected from the group consisting of Pt, Pd, Rh, Ru, Cu, Mn, Co, Mo, Ti, V, W, Ni, Ag, Au, Fe, Os, Ga, In, Tl, Pb, Ir, Zr, Ta, Hf, Tc, Re, Sn, Cr, Zn, Li, Na, K, Rb, Cs, Be, Mg, Ca, Sr, Ba, Y, La, Pr, Nd, Pm, Sm, Eu, Gd, Tb, Dy, Ho, Er, Tm, Yb, Lu, and Ce. When the oxidation unit is used as a catalyst oxidizer, any oxidation catalyst may be used, including, for example, a noble metal group catalyst, a transition metal catalyst, and a perovskite-based catalyst. The catalyst component may be prepared by being supported on the porous body, ion-exchanged therewith, or co-precipitated with an adsorbent and the catalyst component. In addition, the support may have a spherical or cylindrical shape, and may also include an extruded honeycomb or a directionally oriented molded honeycomb in which the catalyst component is supported, ion-exchanged, or coated, or a structure formed of catalyst particles themselves.

In addition, when a catalyst oxidizer is used, the amount of catalyst is determined based on a gas hourly space velocity (GHSV), which is a processing amount per unit volume of catalyst per hour. The GHSV may be used in a range of 1,000 to 100,000 hr⁻¹ depending on the catalyst component, but the present disclosure is not limited thereto. However, in general, a range of 5,000 to 50,000 hr⁻¹ is preferable for noble metals and transition metals.

In the present disclosure, an operating mechanism of the concentration and oxidation apparatus is as follows.

In the present disclosure, during operation of the adsorption concentrator, the temperature of gas passing through the adsorption concentrator may change as follows.

After desorption is performed by desorption gas introduced from the heating unit into the desorption region of the adsorbing member, the adsorbing member in the desorption region becomes a cooling region and is cooled by a cooling gas flow.

At this time, the temperature of the desorption gas flow ③ introduced into the adsorption concentrator 110 is maintained at a predetermined set temperature. For example, when the set temperature of the desorption gas flow ③ is 220°C, the desorption gas flow ③' at an outlet of the adsorption concentrator may vary depending on the heat storage capability of the adsorbing member and the rotational speed of the adsorbing member, but is about 50 to 100°C.

At this time, in the present disclosure, all or some of the desorption gas flow ③' is branched to form a recirculation flow ④ and merges with the cooling gas flow ② to be introduced into the cooling region of the adsorbing member. The cooling gas flow passes through the adsorbing member to cool the cooling region, and the temperature of the cooling gas flow ②" passing through the cooling region becomes about 150 to 200°C. Of course, the temperature of the cooling gas flow ②" described above is merely an example and may be controlled within 60 to 90°C of the temperature of the desorption gas flow ③ according to other process conditions such as a recirculation rate. Accordingly, assuming that the temperature of the cooling gas flow ②" is 170°C, the heating unit may maintain a preset temperature, that is, 220°C, as the desorption gas flow ③ even if the temperature is increased by only about 50°C.

Meanwhile, in the present disclosure, when the concentration of the desorption gas flow ③ is equal to or higher than a preset concentration, a portion of the desorption gas flow ③ introduced into the desorption region is branched and supplied to the oxidizer 150. In the present disclosure, the concentration of an oxidizer inlet gas flow ⑦ may be determined based on the calorific value of contaminant components in the gas flow. When the contaminant component is toluene, combustion of toluene at about 440 ppm may increase a gas temperature after oxidation by about 50°C. Accordingly, exhaust gas of the oxidizer has a temperature of about 270°C, and by merging a first oxidizer exhaust gas flow ⑧ into a cooling gas flow ②" having a relatively low temperature (about 170°C), a set temperature of the desorption gas flow ③, that is, 220°C, may be achieved. In this case, it is assumed that flow rates of the first oxidizer exhaust gas flow ⑧ and the cooling gas flow ②" are equal. Accordingly, energy required for the heating unit 130 may be reduced, or preferably, operation of the adsorption concentrator may be performed without additional energy supply to the heating unit. In this case, the desorption gas flow ③ may bypass the heating unit 130.

As described above, according to an aspect of the present disclosure, when the concentration of contaminant components in the desorption gas flow ③' discharged from the adsorption concentrator is equal to or lower than a preset concentration (e.g., a preset concentration of 440 ppm or less based on toluene), a portion or all of the desorption gas flow ③' may be recirculated to the adsorption concentrator. In addition, according to an aspect of the present disclosure, the concentration of contaminant components in the gas increases by recirculation, and when the concentration of the contaminant components reaches a preset concentration, at least a portion of the desorption gas flow ③' is branched. In addition, according to an aspect of the present disclosure, gas branched from the desorption gas flow ③' is introduced into the oxidizer 150 by a recirculation flow and is combusted in the oxidizer 150. Combustion gas having an increased temperature due to combustion in the oxidizer 150 may merge into the cooling gas flow ②" as a first oxidizer exhaust gas flow ⑧ and may be provided as the desorption gas flow ③. At this time, a merging point A of the first oxidizer exhaust gas flow ⑧ may be located upstream of a branching point B of the desorption gas flow introduced into the oxidizer.

The apparatus of the present disclosure may include a second oxidizer inlet gas flow ⑥ for supplying a concentrator exhaust gas flow ⑤ to the oxidizer. In the present disclosure, the flow rate of the second oxidizer inlet gas flow ⑥ may be set in consideration of a recirculation rate. In addition, when the concentration of contaminant components in the desorption gas flow ③' is equal to or higher than a preset concentration, the desorption gas flow ③' is provided as the concentrator exhaust gas flow ⑤, and all or a portion thereof may be introduced into the second oxidizer inlet gas flow ⑥ and supplied to the oxidizer. In this case, when the oxidizer 150 is configured as a heating device + catalyst 1 + catalyst 2 in consideration of temperature and concentration balances and a catalyst oxidizer is used, the second oxidizer inlet gas flow ⑥ may be supplied between catalyst 1 and catalyst 2 of the oxidizer. That is, there is no need to limit a supply position to only one of an upstream end, a middle stage, or a downstream end of the oxidizer.

Meanwhile, in the present disclosure, in order to satisfy a mass balance within the apparatus, a portion of gas combusted in the oxidizer 150 may be discharged to the outside of the apparatus as a second oxidizer exhaust gas flow ⑨.

Meanwhile, although a case in which a recirculation flow branched from the desorption gas merges into the cooling gas flow ②' has been described above, the present disclosure is not limited thereto, and other designs of recirculation flow paths may be applied in order to increase the concentration of the desorption gas. For example, FIG. 2A illustrates another recirculation gas flow ⑩ merging into the emission source gas flow ①. In the present disclosure, the recirculation gas flow ⑩ may be provided simultaneously with the recirculation flow ④ described above, or may be provided independently of the recirculation flow ④.

As described above, in the present disclosure, when the concentration of contaminant components in exhaust gas from an emission source is low, a recirculation rate may be set to a maximum so as to suppress discharge of gas to the outside of the apparatus, whereas when the concentration of the contaminant components increases to some extent, a mass balance may be maintained by discharging gas passing through the oxidizer to the outside while adjusting the recirculation rate.

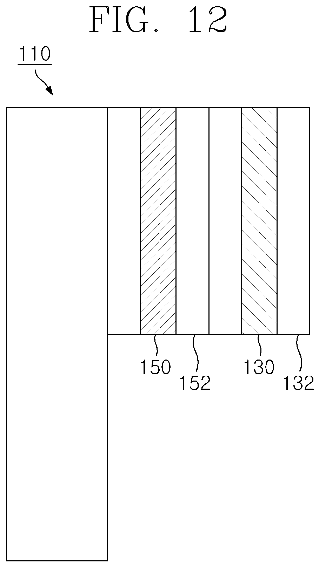

In the present disclosure, the oxidizer 150 and the heating unit 130 may be provided in an assembly form coupled to the concentration and oxidation unit 110. FIG. 12 is a view schematically illustrating such an example.

Referring to FIG. 12, an oxidation catalyst layer 150 may be provided on a cooling-region outlet side and a desorption-region inlet side of the concentration and oxidation unit 110, a catalyst chamber 152 in which the oxidation catalyst layer 150 is installed may be coupled to the concentrating member 10, and a desorption chamber 132 including a heating unit 130 may be coupled to the catalyst chamber 154.

### [Modes of Carrying out the Invention]

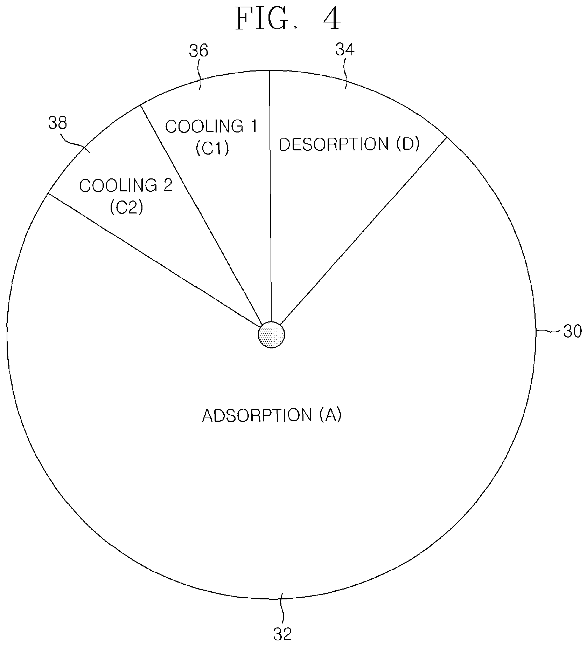

FIG. 4 is a view schematically illustrating another example of an adsorbing member used in the present disclosure. As illustrated in FIG. 4, the adsorbing member may include a first cooling region and a second cooling region.

A concentration and oxidation apparatus including the adsorbing member of FIG. 4 may have the following configuration.

The concentration and oxidation apparatus includes an adsorption concentrator configured to adsorb and concentrate gaseous substances in exhaust gas discharged from an emission source, and an oxidizer configured to oxidize the gaseous substances concentrated by the adsorption concentrator. In this case, the adsorption concentrator may include an adsorbing member including an adsorption region, a desorption region, a primary cooling region, and a secondary cooling region, for adsorbing, concentrating, and desorbing gaseous substances in exhaust gas discharged from the emission source. The adsorption concentrator may include a plurality of flows including an exhaust gas flow for introducing the exhaust gas from the emission source into the adsorption region, a desorption gas flow introduced into and discharged from the desorption region, and a first recirculation flow branched from the desorption gas flow discharged from the desorption region and passing through the primary cooling region. The concentration and oxidation apparatus may include a heating unit configured to heat the desorption gas flow introduced into the desorption region, and an oxidizer located at any one position of (a) a downstream end of the first cooling region, (b) an upstream end of the desorption region, or (c) a position branched from a flow between the cooling region and the desorption region. As the oxidizer, for example, a catalyst oxidizer, a regenerative thermal oxidizer, or a regenerative catalyst oxidizer may be used.

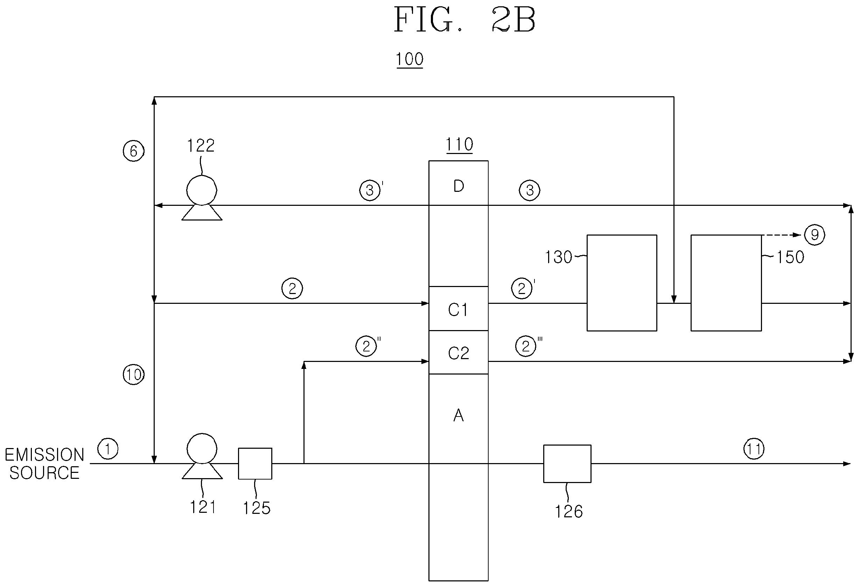

FIG. 2B is a view schematically illustrating a concentration and oxidation apparatus according to another embodiment of the present disclosure, configured to highly concentrate and treat gaseous substances. In FIG. 2B, the same reference numerals as those in FIG. 2A denote the same elements, and redundant descriptions are omitted.

As illustrated in FIG. 2B, the concentration and oxidation apparatus may include an adsorption concentrator 110, a heating unit 130, and an oxidizer 150, and may include blowers such as an adsorption blower 121 and a recirculation blower 122. In addition, the apparatus may include various sensors and auxiliary devices for controlling and monitoring these components.

In the present disclosure, in the desorption region D, gas adsorbed on the adsorbing member 110 is desorbed by a desorption gas flow ③, and the desorption gas flow ③ concentrated to a high concentration is recirculated by the recirculation blower 122 to the emission source gas flow ①, the cooling gas flows ② and ②', and to any position between the cooling regions C1 and C2 and the desorption region D where the cooling gas flow and the desorption gas flow are present. Although FIG. 2B illustrates that three recirculation flows ①, ②, and ②' coexist, the recirculation may be configured as one or more combinations of these recirculation flows in the present disclosure.

The three recirculation flows illustrated in FIG. 2B first increase the concentration of contaminant components in a gas flow introduced into the oxidizer 150, and the cooling regions C1 and C2 serve to increase the temperature of gas introduced into the oxidizer 150. Accordingly, air introduced into the oxidizer 150 by the recirculation flows and the cooling gas flow has a higher temperature and a higher concentration of the concentrated gas than in the related art. As illustrated, the adsorbing member of FIG. 2B includes two cooling regions C1 and C2, and the oxidizer 150 is provided between a cooling outlet of the cooling region C1 and a desorption inlet.

As illustrated, when the cooling region is divided into C1 and C2, a gas flow ②' passing through C1 has a relatively high concentration and temperature, and a gas flow passing through C2 has a relatively lower concentration and temperature than the gas flow passing through C1. Accordingly, the oxidizer 150 is installed in the gas flow ②' passing through C1 so that the gas flow introduced into the oxidizer 150 is closer to an oxidation initiation temperature. If the gas flow introduced into the oxidizer 150 does not reach the oxidation initiation temperature of the oxidizer 150, energy may be supplied by the heating unit 130. Gaseous contaminant components that have reached the oxidation initiation temperature in the oxidizer 150 are oxidized in the oxidizer 150 to generate heat of oxidation, and the heat of oxidation may be used as an energy source for desorption. Accordingly, when the concentration of the gas flow introduced into the oxidizer 150 is high, the heat of oxidation increases, thereby allowing a desorption operation to be performed without adding additional energy by the heating unit 130.

Meanwhile, when the temperature of the gas flow ②' in the cooling region C1 is too low, an additional heat exchange unit may be installed in the gas flow ②' introduced into the heating unit and the oxidizer. The heat exchange unit may be an indirect heat exchanger (recuperative heat exchanger) or a regenerative heat exchanger. When the heat of oxidation generated in the oxidizer 150 is excessively high, so that the temperature of the oxidizer 150 increases or a temperature at a desorption inlet becomes excessively high, the heat may be discharged to the outside or reused in the oxidizer 150. A point at which the heat is discharged to the outside may be the oxidizer 150 or any point between the downstream end of the oxidizer and the desorption gas flow ③.

Although FIG. 2B illustrates that outlets of the two cooling regions are connected by separate conduits, in the present disclosure, the outlets of the two cooling regions may be configured as a single conduit.

Hereinafter, various embodiments of the concentration and oxidation apparatus according to the present disclosure will be described. Although various embodiments of the present disclosure are described below, for example, sensors for measuring gas flows, dampers for controlling a direction and a flow rate of gas flows, and blowing units for transferring gas flows may be additionally provided at appropriate positions as necessary. In addition, directions of the gas flows described below and illustrated in the drawings may be appropriately changed.

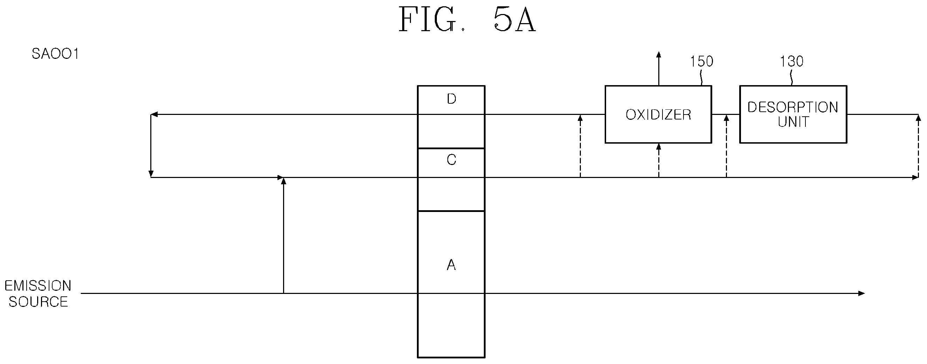

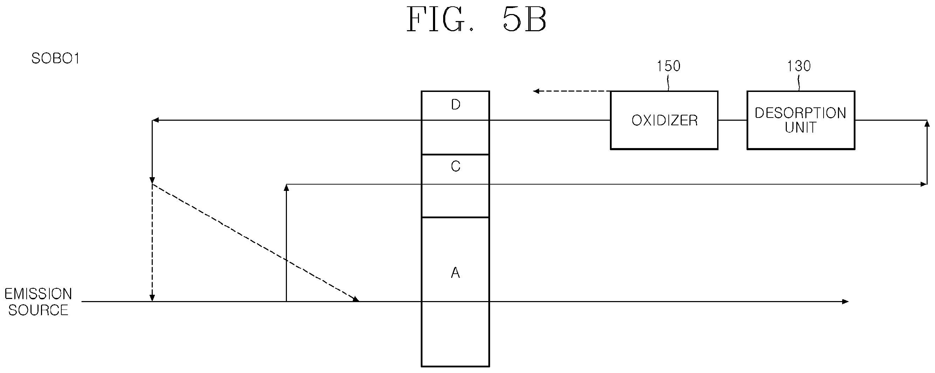

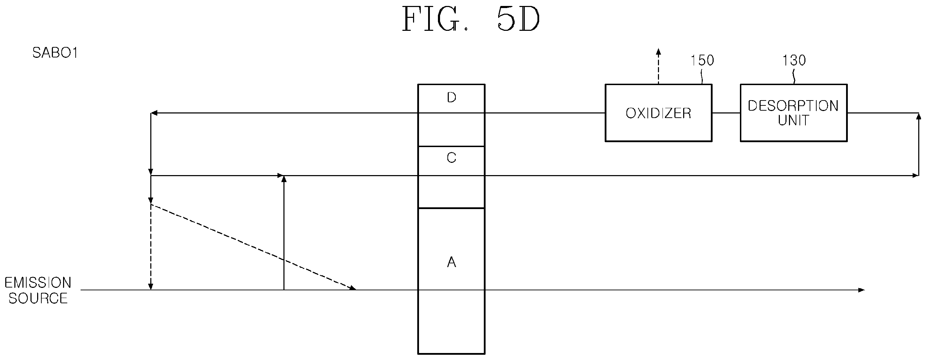

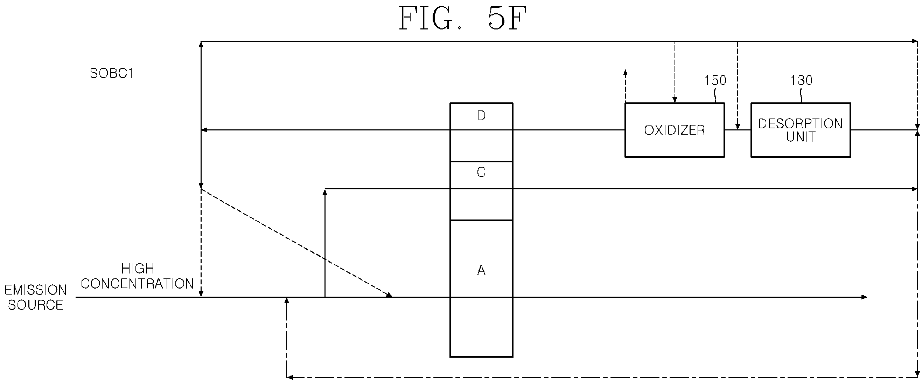

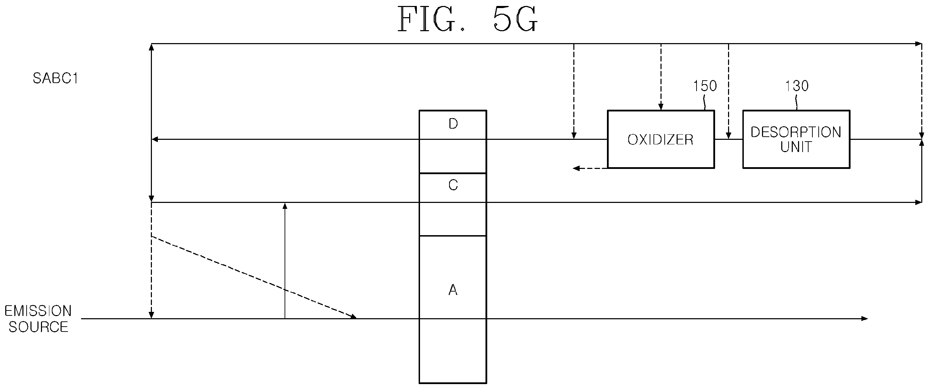

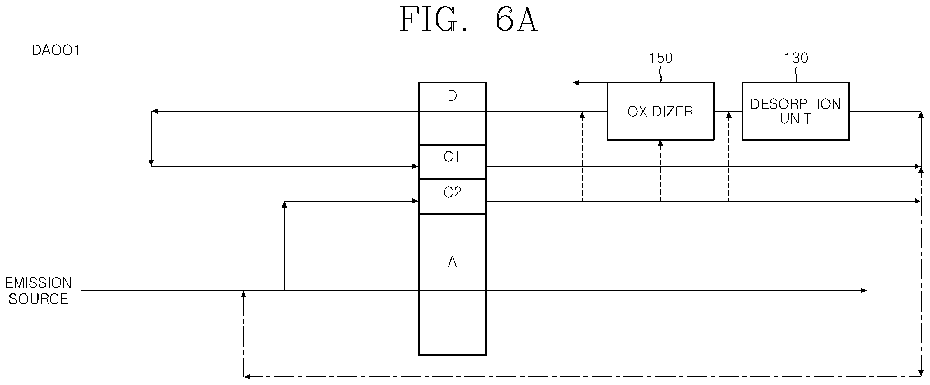

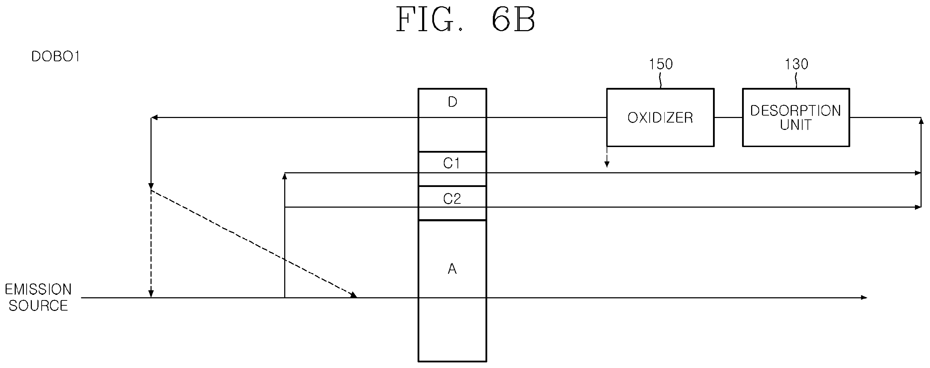

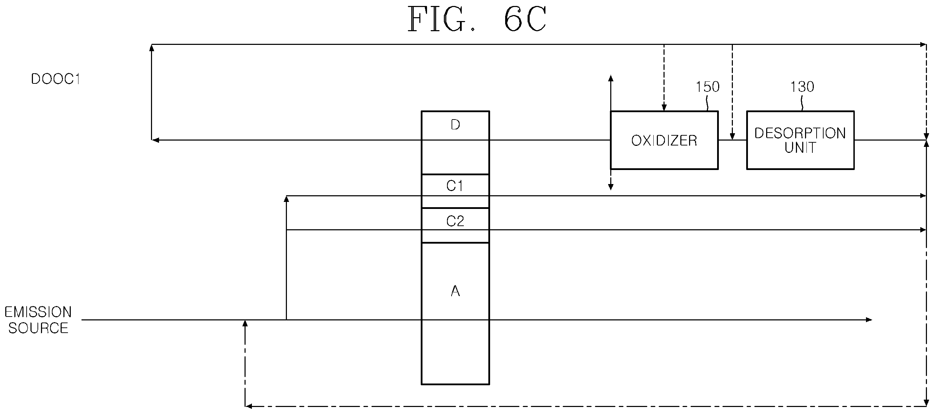

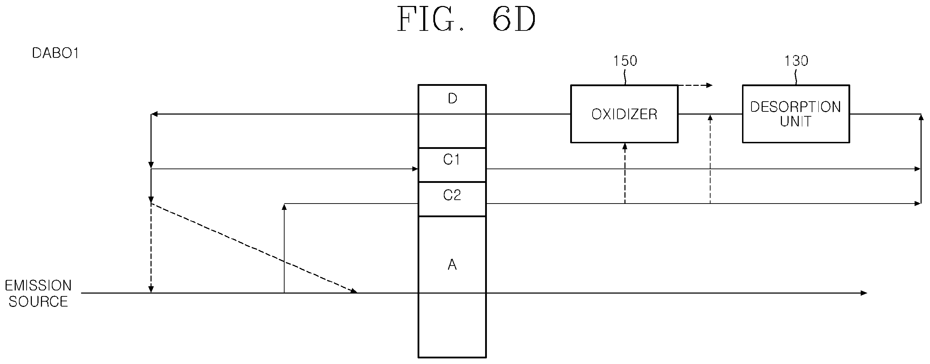

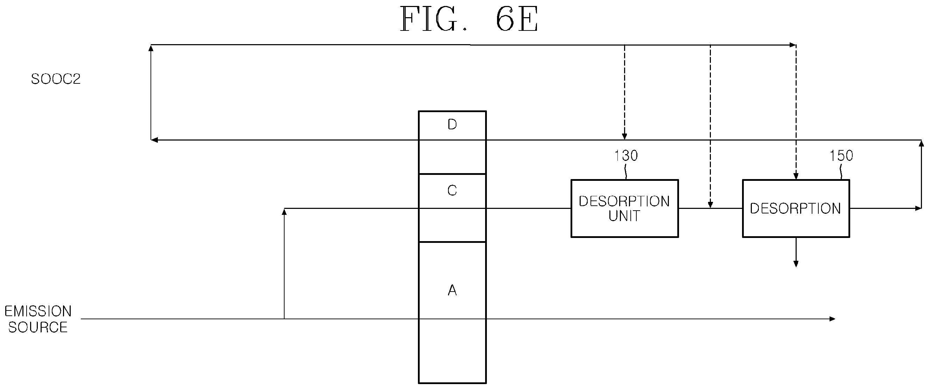

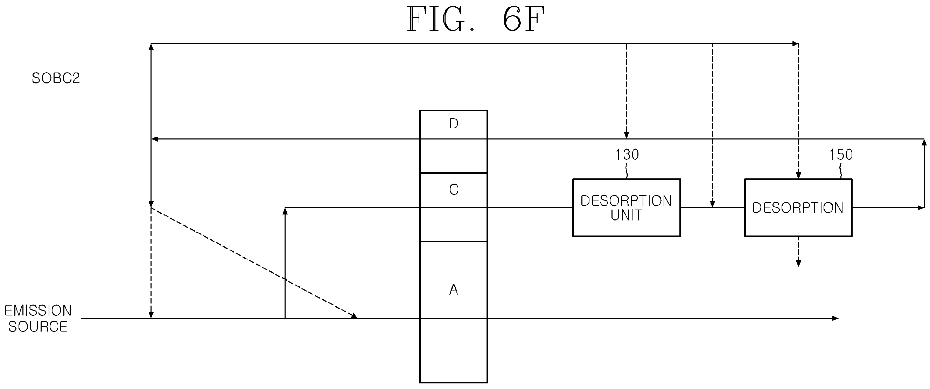

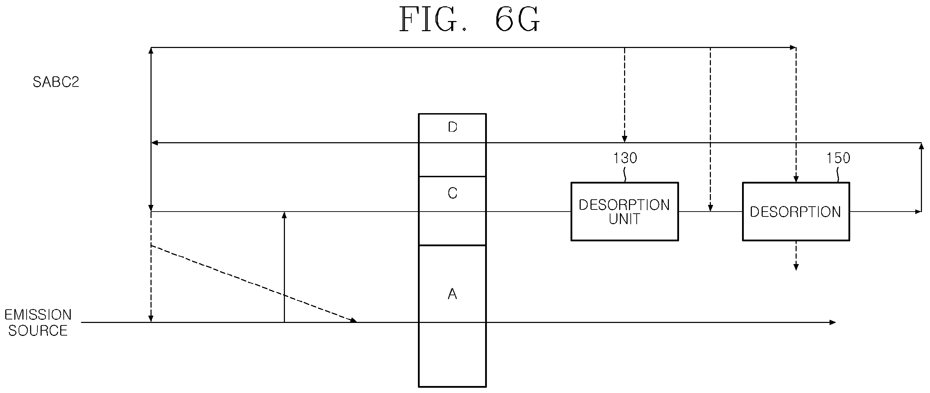

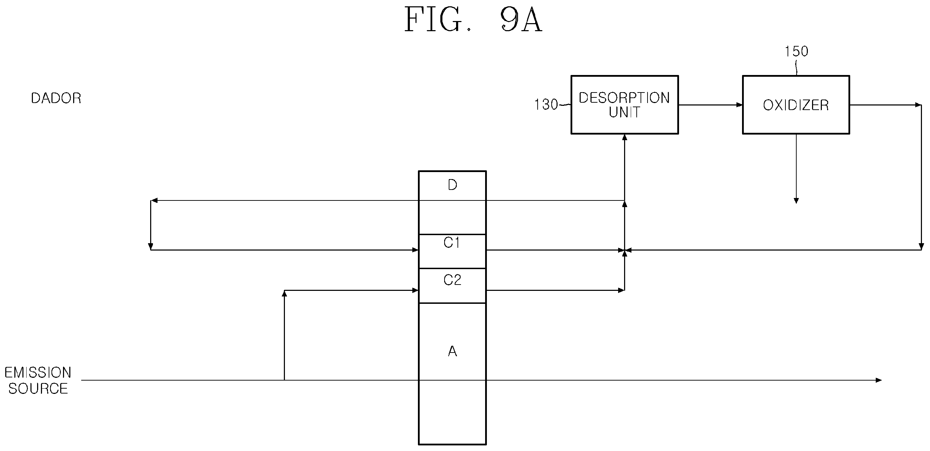

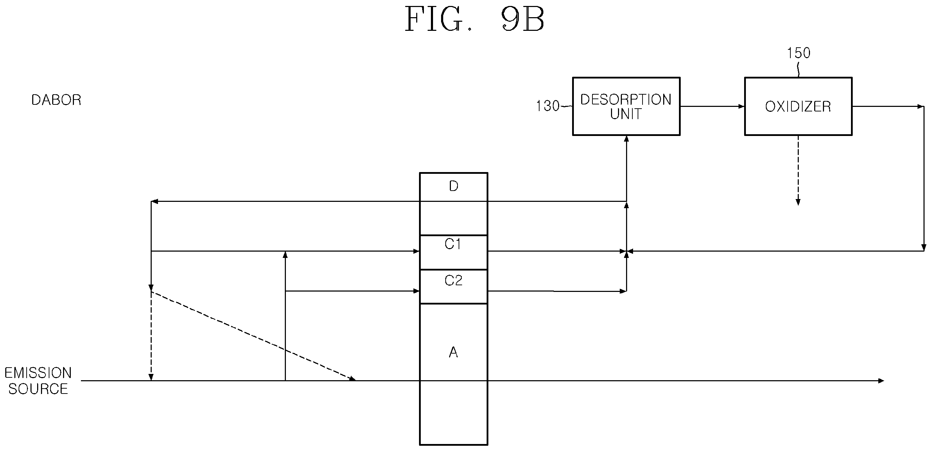

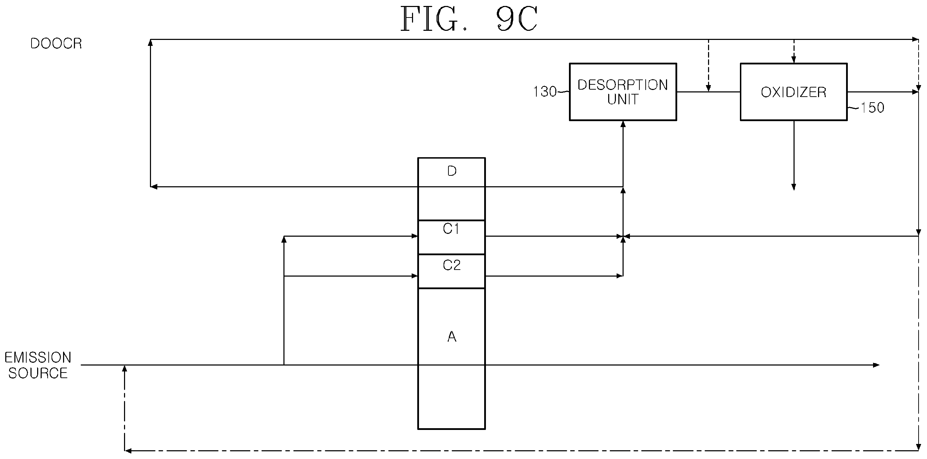

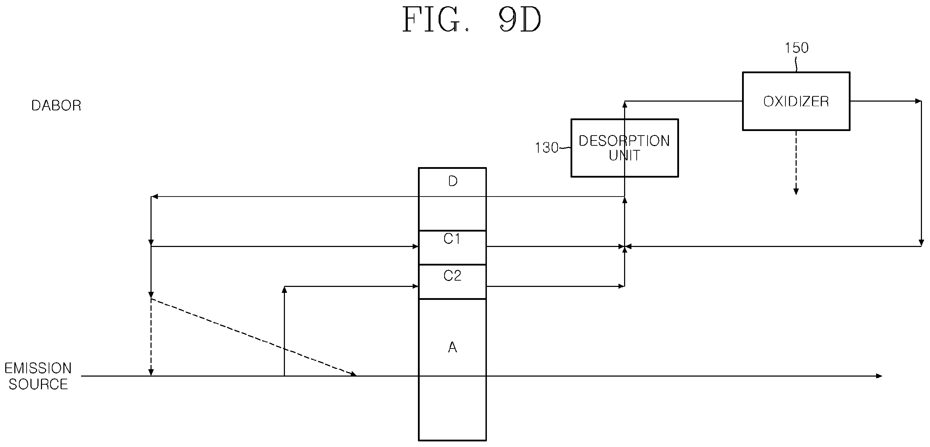

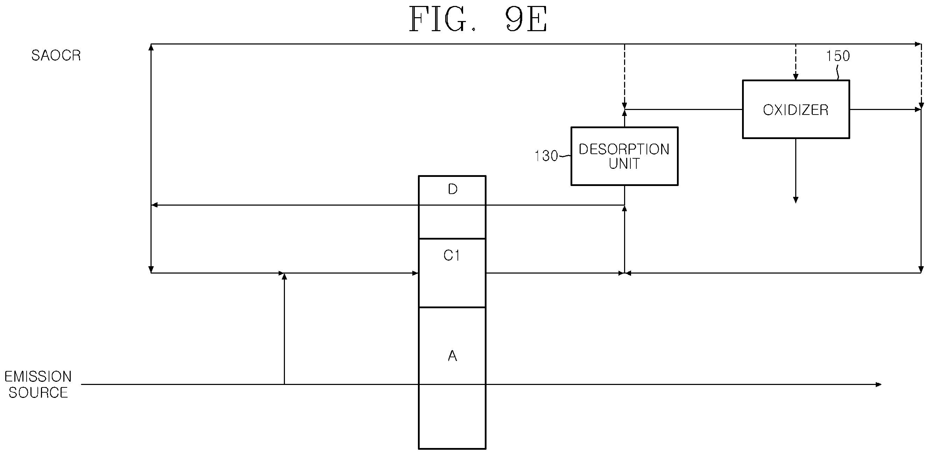

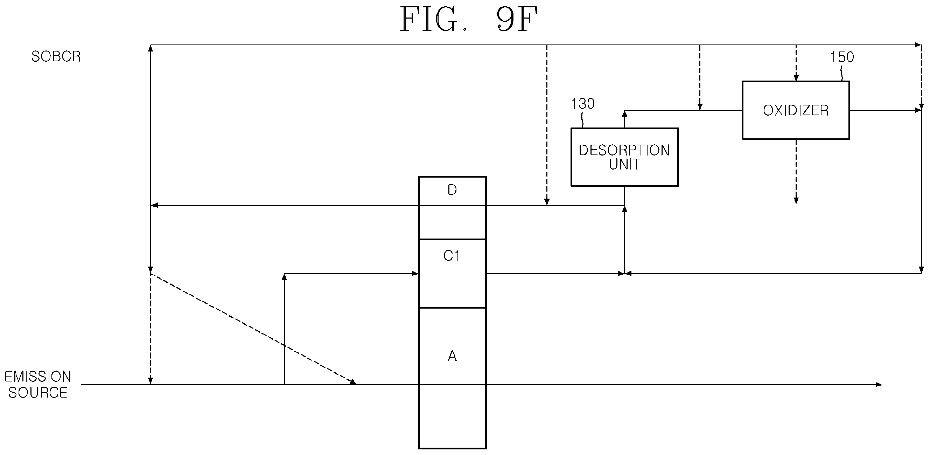

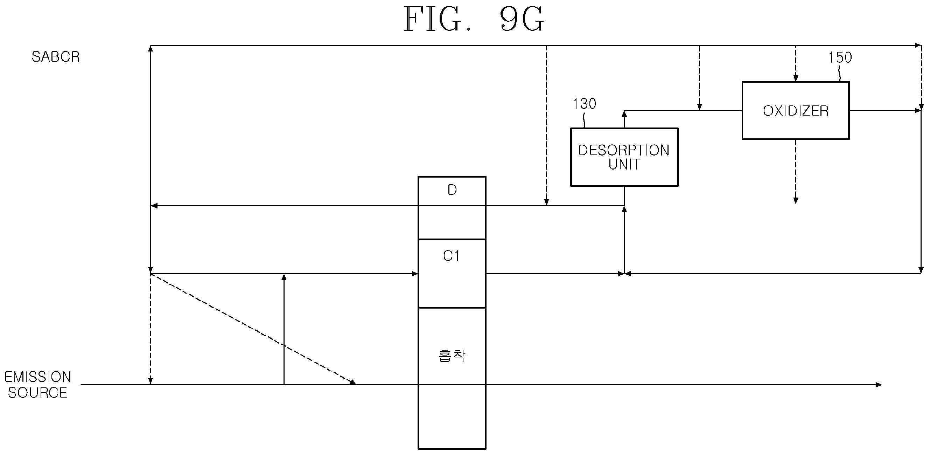

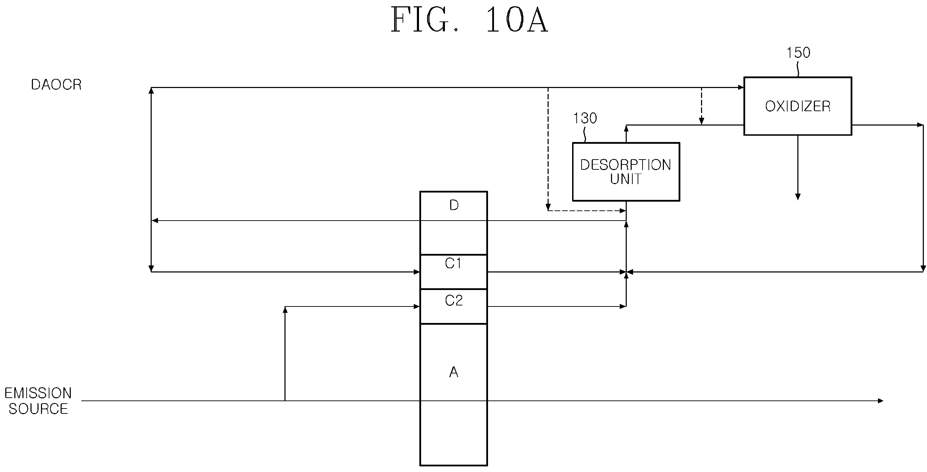

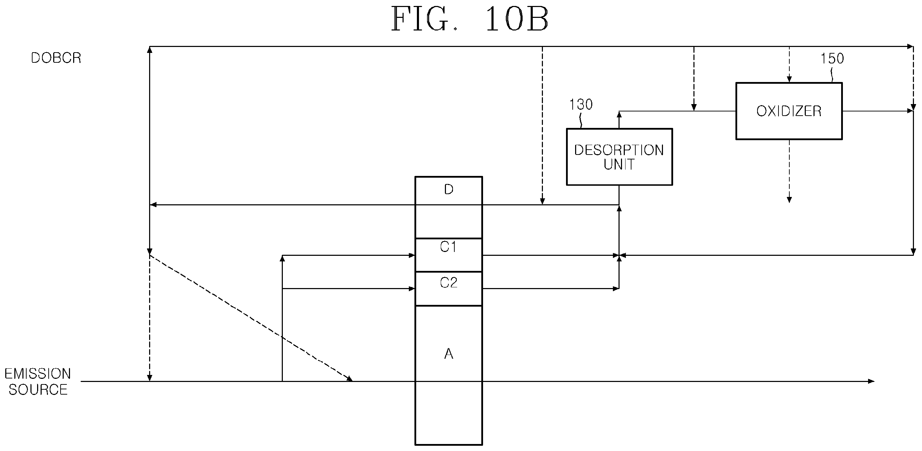

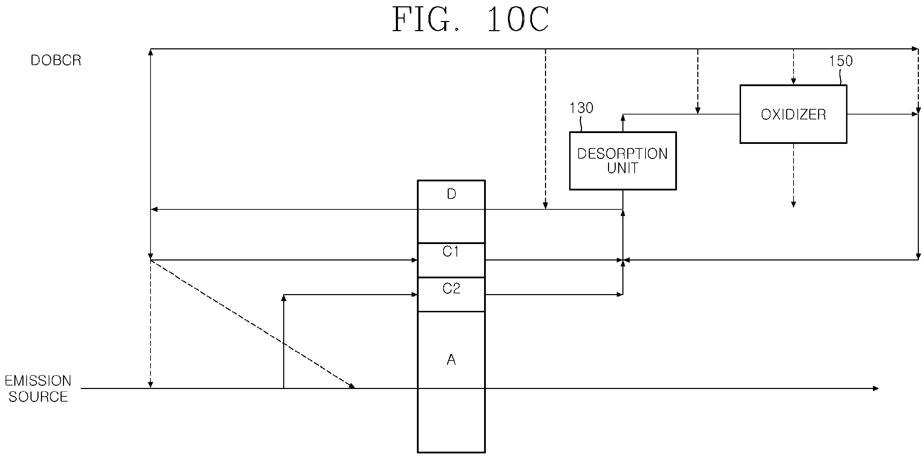

In the present disclosure, on a gas flow path along which a cooling gas flow discharged from a cooling region continues as a desorption gas flow introduced into a desorption region, a heating unit and an oxidizer may be arranged in series. In this case, on the gas flow path, the oxidizer may be positioned downstream or upstream of the heating unit, and in addition, the oxidizer and the heating unit may be arranged at various points between the cooling gas flow and the desorption gas flow, and gas branched from various points on the gas flow path may be introduced into the oxidizer and the heating unit. Schematic configurations and gas flows of the apparatus having such various arrangements according to the present disclosure are illustrated in FIGS. 5A to 10C.

In the drawings below, each apparatus may be represented by a five-digit code such as XXXXX, and meanings of characters or numbers used as each code are as follows.

First digit: D indicates a case where there are two cooling lines (cooling 1 and cooling 2) and both an inlet and an outlet are separated, and S indicates a case where the cooling lines have separated inlets but merged outlets (and a purge line is also merged).

Second digit: A indicates a case where a process A, in which a recirculation flow enters a cooling line, is applied, and O indicates a case where the process A is not applied.

Third digit: B indicates a case where a process B, in which a recirculation flow enters an inlet line, is applied, and O indicates a case where the process B is not applied.

Fourth digit: C indicates a case where a process C, in which a recirculation flow enters a desorption inlet line, is applied, and O indicates a case where the process C is not applied.

Fifth digit: when an oxidizer is applied, the fifth digit indicates a position of application, where 1 indicates a desorption line, 2 indicates a cooling 1 line, and R indicates a case where a recirculation cycle is used by branching from a cooling outlet line.

In the drawings, dashed lines indicate various options in which gas flows may be connected, and when any one of the dashed lines is connected, other dashed-line flows may not be connected. For example, in the case of SAOO1, process A, in which recirculation enters a cooling line, is applied, and it is sufficient that at least one of the dashed lines through which gas is introduced from a cooling outlet into the heating unit 130 and the oxidizer 150 is provided. In addition, a line illustrated by a solid line and discharged to the outside without entering a desorption inlet from the oxidizer indicates that the gas is harmlessly treated in the oxidizer and then discharged to the outside.

Meanwhile, in the case of SOBO1, a recirculation line extending from a downstream end of a desorption region to an adsorption region may be connected to either one of positions before or after a point at which cooling air is branched at an inlet to the adsorption region, and may be provided at both positions. However, an arrow illustrated by a dashed line and directed to the outside from the oxidizer 150 indicates that discharge to the outside is not necessarily required.

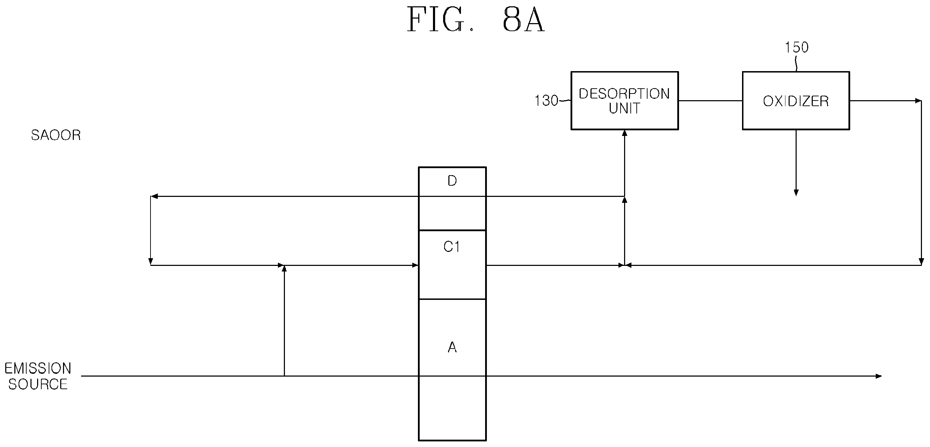

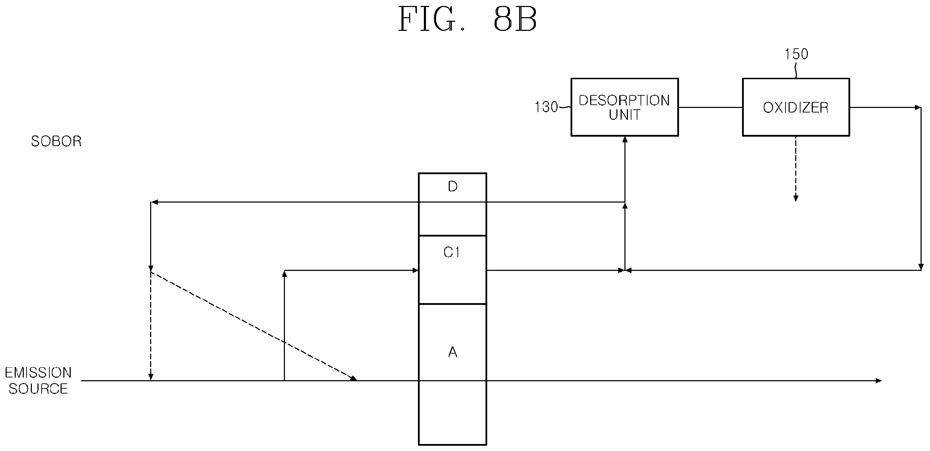

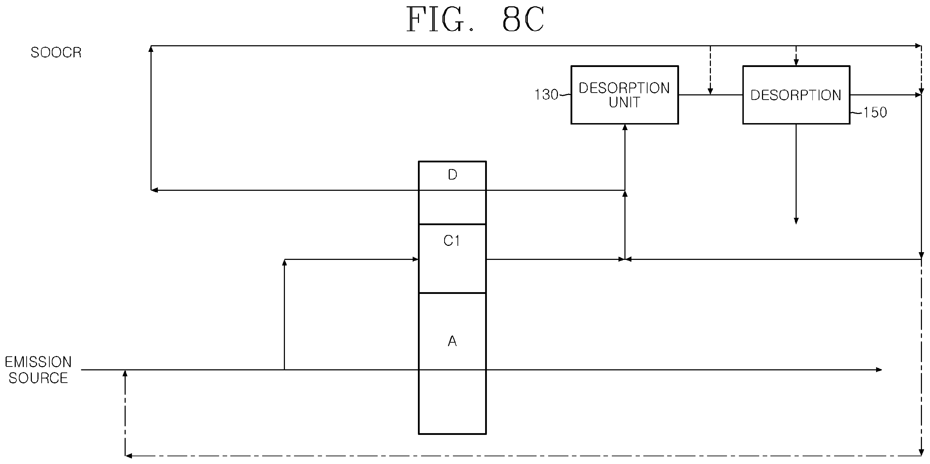

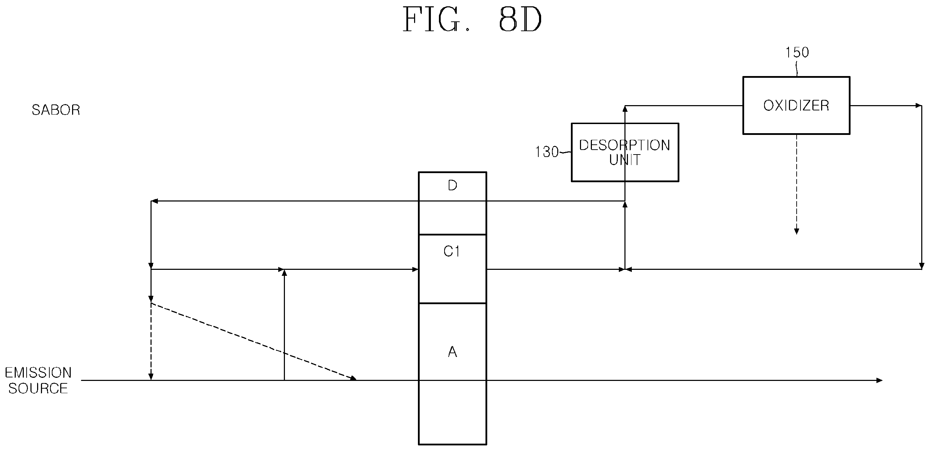

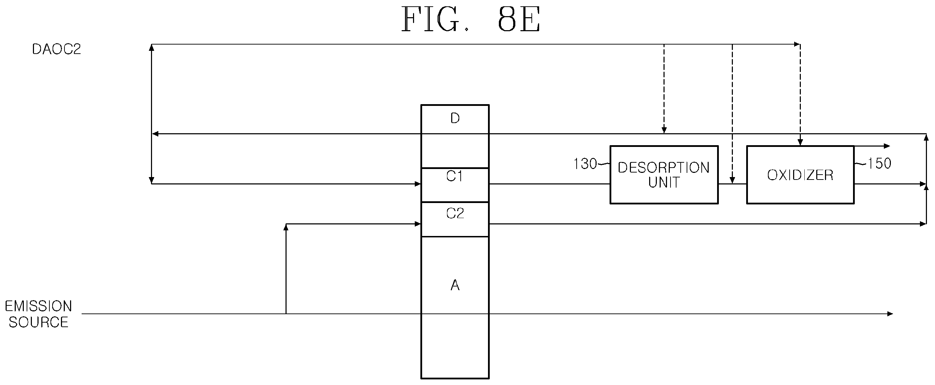

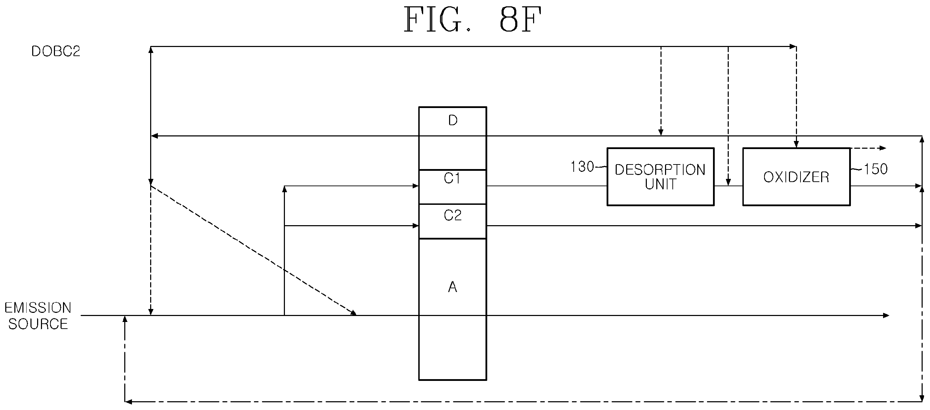

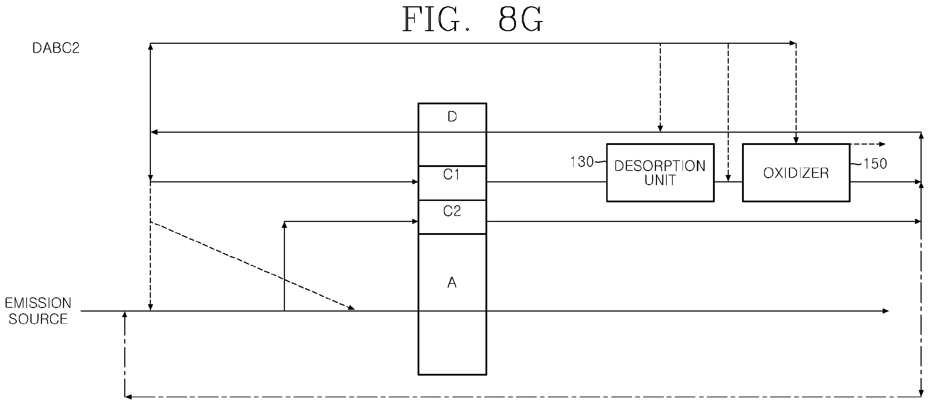

In addition, DABC2 of FIG. 8G may be described as follows.

An exhaust gas flow discharged from an emission source passes through an adsorption region A of an adsorbing member and is purified. A second cooling gas flow branched from the exhaust gas flow and introduced into a secondary cooling region C2 passes through the secondary cooling region C2 of the adsorbing member and then passes through a primary cooling region to merge with a first cooling gas flow that has passed through the heating unit 130 and the oxidizer 150. However, all or a portion of the second cooling gas flow may be branched again and mixed at any one point with the exhaust gas flow before entering the adsorption region A or after passing through the primary cooling region C1, and may be discharged to the outside. When discharged to the outside, the concentration of contaminants in the second cooling gas flow may be directly or indirectly monitored before discharge. When the concentration of the exhaust gas to be treated is high or harmfulness is high, the second cooling gas flow may use an external gas instead of exhaust gas from the emission source. In this case, the external gas may include clean atmospheric air, purified exhaust gas, air having a controlled oxygen concentration, or, when a flammable substance is a gaseous substance, an inert gas such as nitrogen, carbon dioxide, or helium.

In the present case, a first cooling gas flow passing through the primary cooling region C1 is formed such that a high-concentration, concentrated gas desorbed in the desorption region D is branched and recirculated, and when the first cooling gas flow passes through the primary cooling region C1, heat exchange occurs due to the high-concentration gas desorbed in the desorption region D and a heated adsorbing member, so that the first cooling gas flow becomes a high-concentration and high-temperature concentrated gas. At this time, since the adsorbing member that has passed through the desorption region D is heated to a high temperature, contaminant components in the recirculated concentrated gas are less likely to be re-adsorbed. Accordingly, when the temperature of the adsorbing member is sufficiently high during the cooling process, adsorption hardly occurs, and the gas may pass through the primary cooling region C1 without substantial adsorption. In this case, when a temperature required for oxidation of contaminant components in the concentrated gas is formed, the contaminant components may be oxidized in the oxidizer 150 without additional heating by the heating unit 130, and when the temperature required in the oxidizer 150 is insufficient, additional heating may be performed. The first cooling gas flow heated by the heating unit 130 or the oxidizer 150 as described above merges with a second cooling gas flow to form a desorption gas flow. Contaminant components adsorbed in an adsorption region D of an adsorbing member are desorbed and concentrated by a high-temperature desorption gas flow. At this time, during the recirculation, the concentrated desorption gas flow is recirculated through the primary cooling region C1, an exhaust gas flow from an emission source, and a desorption gas flow before the first cooling gas flow passing through the primary cooling region C1 enters the desorption region D. A recirculation flow branched from the desorption gas flow and circulating to the exhaust gas flow may merge before or after a second cooling gas flow is branched. A recirculation flow branched from the desorption gas flow and recirculated to an upstream end of the desorption region D may be recirculated after the heating unit 130 and after the oxidizer 150, but the present disclosure is not particularly limited thereto.

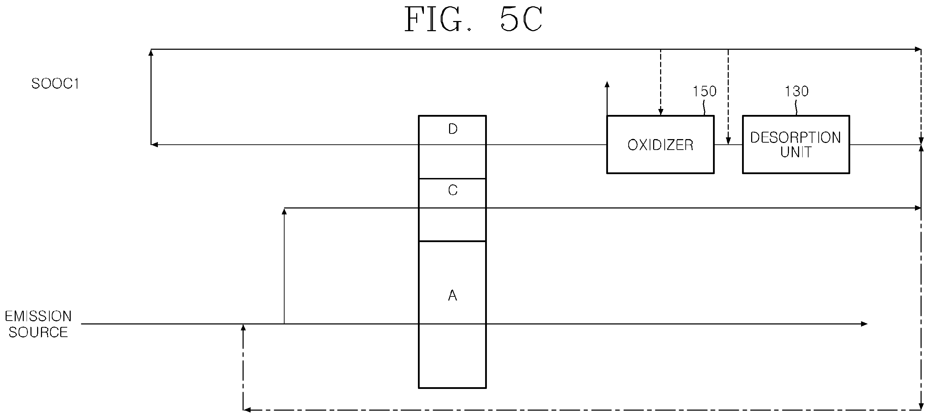

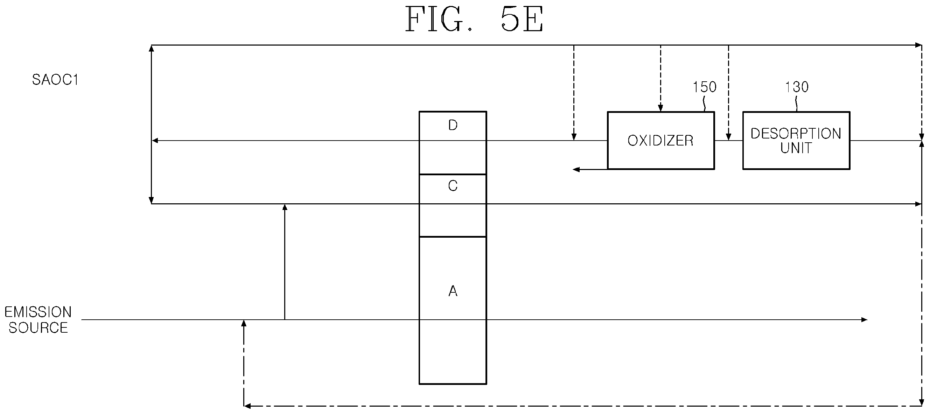

Meanwhile, when the desorption gas flow is recirculated as in the present disclosure, a cooling gas flow branched from the exhaust gas flow is introduced into the cooling region C to cool the adsorbing member and recover heat. At this time, the cooling gas flow having recovered heat desorbs contaminant components adsorbed on the adsorbing member into which a desorption gas flow from the oxidizer 150 is introduced into the desorption region D. The concentration of contaminant components in the desorption gas flow increases, and the desorption gas flow is recirculated again to the upstream end of the heating unit, and the recirculated flow is mixed with the cooling gas flow that has passed through the cooling region as described above and introduced into the desorption unit. The introduced gas flow passes through the heating unit and the oxidizer, whereby contaminant components are oxidized, and energy obtained therefrom is used as desorption energy. In this process, the cooling gas flow and the desorption gas flow have a difference in flow rate corresponding to a recirculated amount, and thus cooling efficiency in the cooling region may be reduced due to the difference in flow rate. Accordingly, when the flow rate of the cooling gas passing through the cooling region is made similar to the flow rate of the desorption gas or increased to an amount required for cooling, and a portion thereof is branched and introduced into an adsorption inlet, a problem of reduced cooling may be addressed. In order to solve such a problem, FIGS. 5C and 5E illustrate a supplemental gas flow (indicated by a dash-dot chain line) that is branched from a cooling gas flow and merges into an inlet gas flow.

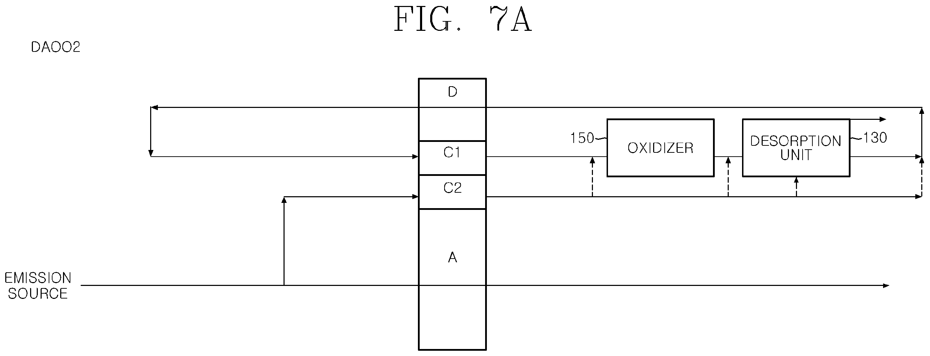

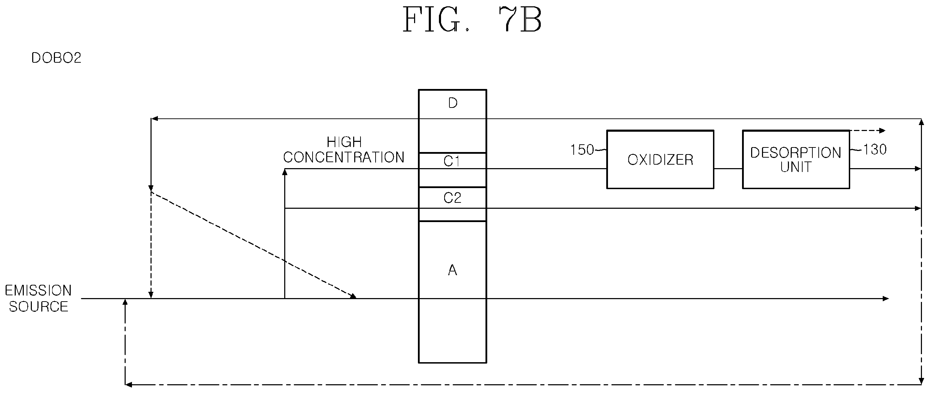

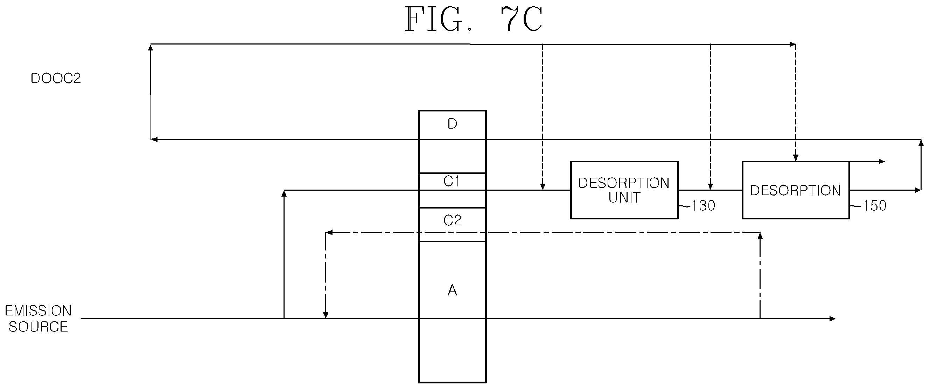

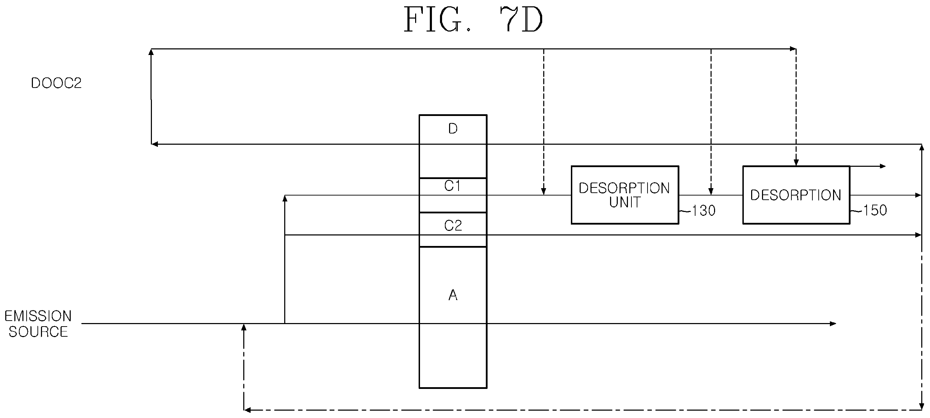

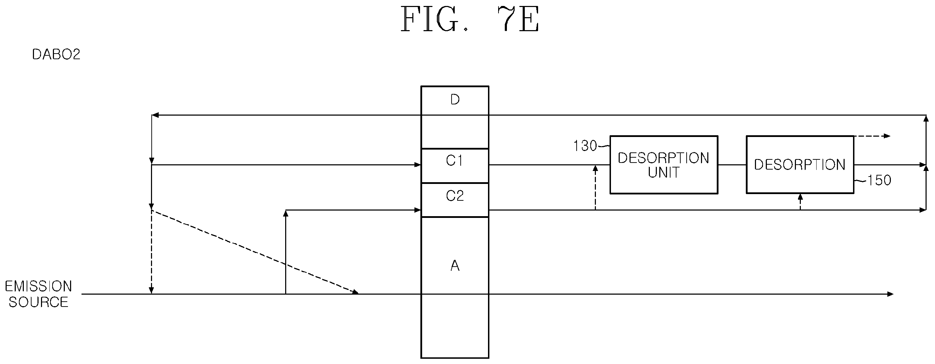

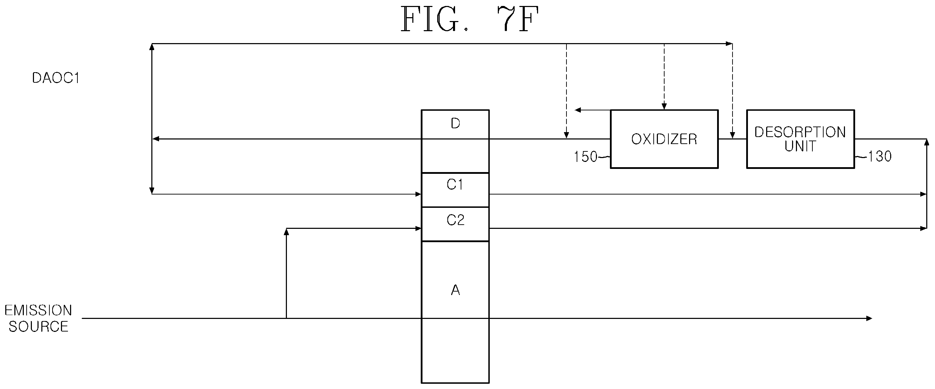

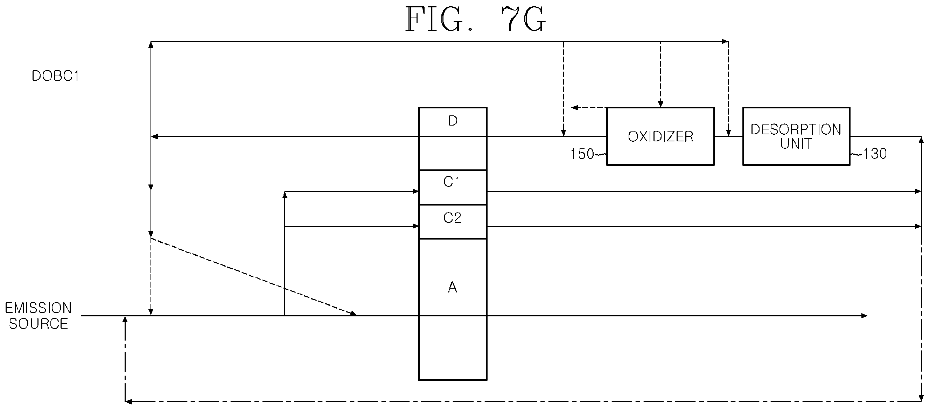

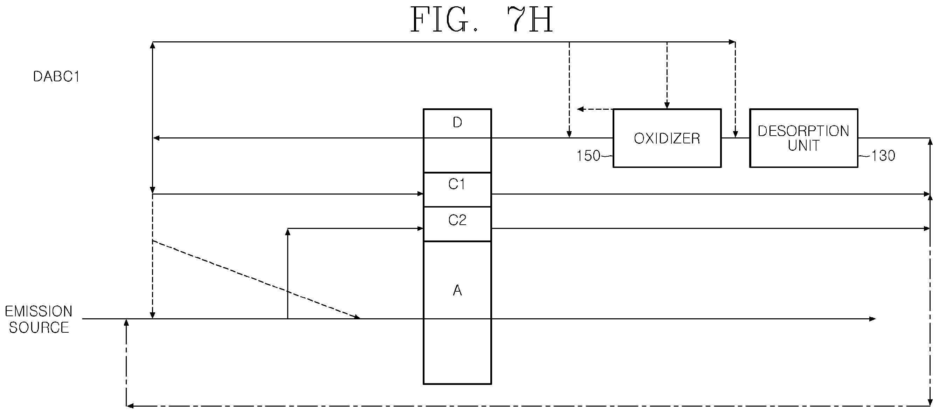

This gas flow may be a reverse flow of the illustrated flow. In addition, instead of the gas flow, external air, exhaust gas from a contamination source, or purified gas may be used. Here, the external air may include clean atmospheric air, air having an adjusted oxygen concentration, or, for gaseous combustible substances, an inert gas such as nitrogen, carbon dioxide, or helium. FIG. 7C illustrates that purified gas is used as the supplemental gas flow.

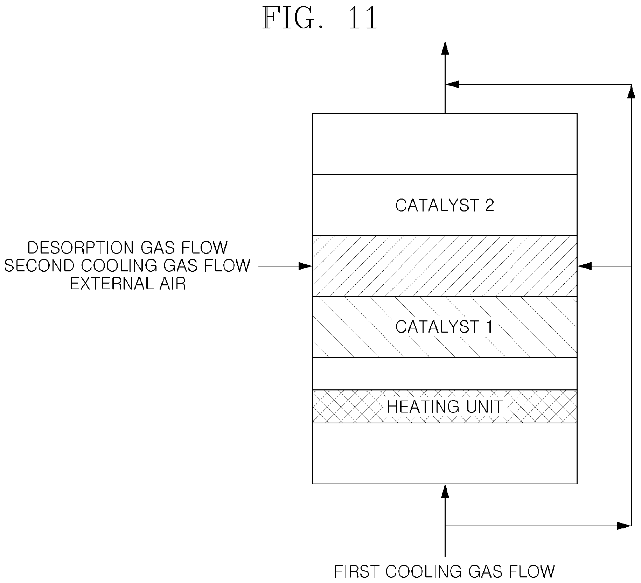

FIG. 11 is a view schematically illustrating that a desorption gas flow is recirculated and passes through an oxidizer using a catalyst coupled to a heating unit.

Here, a first cooling gas flow recirculated to the oxidizer has a high concentration of contaminant components and a high temperature. At this time, when the concentration of contaminant components is excessively high, the first cooling gas flow may be branched to form a bypass flow path that does not pass through the heating unit and the oxidizer. In this case, the concentration of the recirculated gas flow may be more stably controlled, and the configuration may allow bypassing when the concentration exceeds a predetermined level in order to prevent the temperature of the gas flow oxidized by the oxidizer from excessively increasing. In this case, the oxidizer may be configured to be heated by the recirculated desorption gas flow, the second cooling gas flow, and external air, so that an excessively high temperature at a downstream side of the oxidizer may be controlled. A bypass ratio is not particularly limited, but is preferably 50% or less.

### [Industrial Applicability]

The present disclosure is applicable to an apparatus for concentrating and treating gaseous substances such as odor, carbon dioxide, and volatile organic compounds.

## Claims

1. A concentration and oxidation apparatus comprising:
an adsorption concentrator configured to adsorb and concentrate gaseous substances in exhaust gas discharged from an emission source, so that the gaseous substances concentrated by the adsorption concentrator are oxidized,
wherein the adsorption concentrator comprises:
an adsorbing member including an adsorption region, a desorption region, and a cooling region, configured to adsorb, concentrate, and desorb gaseous substances in the exhaust gas discharged from the emission source, and
conduits configured to provide a plurality of flows including an exhaust gas flow for introducing the exhaust gas from the emission source into the adsorption region, a desorption gas flow introduced into and discharged from the desorption region, a cooling gas flow for introducing cooling gas into and discharging the cooling gas from the cooling region, and a recirculation flow branched from the desorption gas flow discharged from the desorption region and merging into at least one of the exhaust gas flow, the cooling gas flow, and the desorption gas flow,
wherein the concentration and oxidation apparatus further comprises:
a heating unit configured to heat the desorption gas flow introduced into the desorption region; and
an oxidizer configured to oxidize the cooling gas flow or gas branched from the cooling gas flow, and
wherein an oxidizer exhaust gas flow discharged from the oxidizer is introduced into the desorption gas flow introduced into the desorption region or merges into the desorption gas flow introduced into the desorption region.

2. The concentration and oxidation apparatus of claim 1, wherein the cooling region of the adsorbing member includes a first cooling region and a second cooling region, and a gas flow that has passed through the first cooling region has a higher temperature than a gas flow that has passed through the second cooling region, and wherein a first cooling gas flow that has passed through the first cooling region is introduced into the oxidizer.

3. The concentration and oxidation apparatus of claim 2, wherein the first cooling gas flow is introduced into the oxidizer via the heating unit.

4. The concentration and oxidation apparatus of claim 1, comprising:
a first oxidizer inlet gas flow branched from a first point of the cooling gas flow and provided to the oxidizer; and
a first oxidizer exhaust gas flow discharged from the oxidizer and merging into a second point of the cooling gas flow,
wherein the first point is located downstream of the second point along a path of the gas flow.

5. The concentration and oxidation apparatus of claim 1, comprising:
a first oxidizer inlet gas flow branched from a first point of the cooling gas flow and provided to the oxidizer; and
a first oxidizer exhaust gas flow discharged from the oxidizer and merging into a second point of the cooling gas flow,
wherein the first point is located upstream of the second point along a path of the gas flow.

6. The concentration and oxidation apparatus of claim 1, wherein the oxidizer is one selected from a group consisting of a catalyst oxidizer, a catalyst oxidizer having recuperative heat exchanger attached thereto, a regenerative thermal oxidizer, and a regenerative catalyst oxidizer.

7. The concentration and oxidation apparatus of claim 1, wherein a first oxidizer inlet gas flow is branched at a downstream end of the heating unit.

8. The concentration and oxidation apparatus of claim 1, wherein the first oxidizer inlet gas flow is branched when a concentration of the desorption gas flow is equal to or greater than a predetermined concentration.

9. The concentration and oxidation apparatus of claim 1, comprising:
a second oxidizer inlet gas flow branched from a desorption gas flow discharged from the desorption region and supplied to the oxidizer.

10. The concentration and oxidation apparatus of claim 9, wherein a purge gas that has passed through a purge region merges into a cooling gas flow discharged from the cooling region.

11. The concentration and oxidation apparatus of claim 1, wherein the recirculation flow merges into a cooling gas flow introduced into the cooling region.

12. The concentration and oxidation apparatus of claim 1 wherein the recirculation flow merges into an exhaust gas flow introduced into the adsorption region.

13. The concentration and oxidation apparatus of claim 1, wherein a cooling unit or a condensation recovery unit is provided in the recirculation flow.

14. The concentration and oxidation apparatus of claim 1, wherein a cooling unit is provided in the desorption gas flow.

15. The concentration and oxidation apparatus of claim 1, wherein a portion of the cooling gas flow merges into an inlet gas flow.
